# EUROPEAN PATENT APPLICATION

(11) **EP 2 325 003 A1**
(43) Date of publication of application: **25.05.2011**
(21) Application number: 11151549.0
(22) Date of filing: 04.06.2007
(51) Int. Cl.: B32B 25/20, B32B 27/28, B32B 37/15, B29C 47/06, B29C 47/14, B01F 5/06

(54) **Extruder die assembly for multilayers**

(30) Priority: 05.06.2006 US 811019 P
(62) Divisional of application: 07777383.6
(71) Applicant: Dow Corning Corporation, Midland, MI 48686-0994 (US)
(72) Inventor: The designation of the inventor has not yet been filed
(74) Representative: Nash, David Allan

(57) **Abstract**

Die insert components, die inserts and die assemblies and systems for making multilayered polymer materials.

## Description

### BACKGROUND OF THE INVENTION

### 1. FIELD OF THE INVENTION

This invention relates generally to thin films and, more particularly, to ductile multilayer films of silicone resins with or without other polymers.

### 2. DESCRIPTION OF THE RELATED ART

Silicone resin films can be used in a variety of different technologies. For example, silicon resin films may be used as substrates for electronic devices or solar cells, to encapsulate devices, as barrier layers, and the like. However, silicone resins are typically brittle in the bulk state and so silicone resin films may be fragile and difficult to handle. Consequently, the applicability of silicone resin films may be limited to contexts in which the fragile nature of the silicone resin films does not prevent or inhibit use of the film.

Techniques exist for making silicone resin films more ductile. For example, rubber particles may be incorporated into the silicone resin before, during, or after forming the silicone resin layer. For another example, rubber segments may be incorporated into the silicone resin before, during, or after forming the silicone resin layer. However, these techniques have a number of drawbacks. For example, conventional techniques for making silicone resin films more ductile tend to result in a lower modulus, an increased coefficient of thermal expansion, and a lower glass transition temperature. The conventional techniques for making silicone resin films more ductile may also decrease the thermal stability and/or the rigidity of the silicone resin film.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

In one embodiment of the present invention, a method is provided for forming ductile multilayer silicone resin films. The method may include forming a silicone resin film including at least two polymer layers. At least one of the polymer layers is a silicone resin layer and the thickness of the silicone resin layer(s) is less than a corresponding ductile transition thickness.

In another embodiment of the present invention, ductile multilayer silicone resin films are formed by layering at least two polymer layers. At least one of the polymer layers is a silicone resin layer and the thickness of the silicone resin layer(s) is less than a corresponding ductile transition thickness.

In yet another embodiment of the present invention, ductile multilayer silicone resin films are provided. The silicone resin film includes at least two polymer layers. At least one of the polymer layers is a silicone resin layer and the thickness of the silicone resin layer(s) is less than a corresponding ductile transition thickness.

### BRIEF DESCRIPTION OF THE DRAWINGS

The invention may be understood by reference to the following description taken in conjunction with the accompanying drawings, in which like reference numerals identify like elements, and in which:
Figures 1A, 1B, 1C, and 1D conceptually illustrate a first exemplary embodiment of a method of forming a multilayer silicone resin film, in accordance with the present invention;
Figures 2A, 2B, and 2C conceptually illustrate a second exemplary embodiment of a method of forming a multilayer silicone resin film, in accordance with the present invention;
Figure 3 conceptually illustrates a first exemplary embodiment of a system that is used to form a multilayer silicone resin film, in accordance with the present invention;
Figure 4 conceptually illustrates a polymer flow undergoing the divide-and-stack process implemented by a die assembly, in accordance with the present invention;
Figure 5 conceptually illustrates a second exemplary embodiment of a system that is used to form a multilayer silicone resin film, in accordance with the present invention;
Figure 6 conceptually illustrates one exemplary embodiment of a multilayer die assembly, in accordance with the present invention;
Figures 7 and 8 depict face-on and cross-sectional views, respectively, of one embodiment of a housing, in accordance with the present invention;
Figures 9 and 10 depict face-on and cross-sectional views, respectively, of the embodiment of the housing shown in Figures 7 and 8 from a different orientation, in accordance with the present invention;
Figures 11 and 12 depict face-on and cross-sectional views, respectively, of one embodiment of an endpiece housing, in accordance with the present invention;
Figure 13 depicts a portion of a multilayer die assembly that includes a plurality of die assemblies and an endpiece die assembly, in accordance with the present invention;
Figures 14A, 14B, and 14C depict one exemplary embodiment of a portion of a die insert, in accordance with the present invention;
Figure 15 depicts two portions that are used to form a single die insert, in accordance with the present invention;
Figure 16 depicts one exemplary embodiment of a completed die insert, in accordance with the present invention; and
Figure 17 depicts the exemplary embodiment of the completed die insert when it is inserted into a portion of a housing, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, _ such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

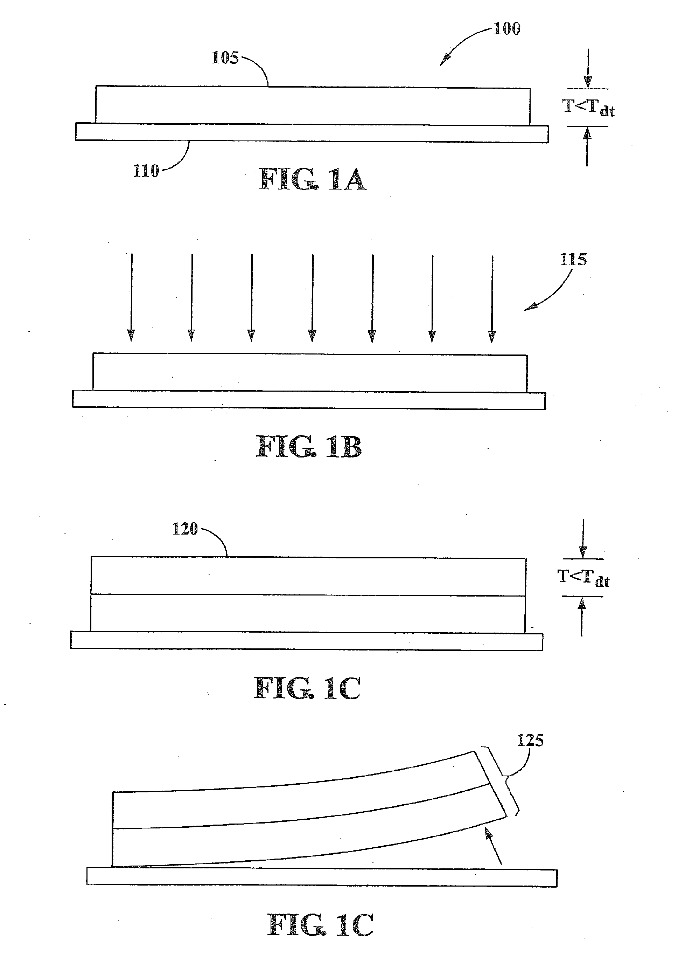

Figures 1A, 1B, 1C, and 1D conceptually illustrate a first exemplary embodiment of a method 100 of forming a multilayer silicone resin film. In the illustrated embodiment, a silicone resin layer 105 is formed above a substrate 110, as shown in Figure 1A. The silicone resin layer 105 may be formed using a variety of techniques. In one embodiment, the silicone resin layer 105 is formed by depositing a curable silicone resin composition over the substrate 110. For example, the film of curable silicone resin composition may be deposited using conventional coating techniques, such as deposition by an ink jet, spin coating, dipping, spraying, brushing, screen-printing, and the like. The curable silicone resin composition is then cured (or partially cured) to form the silicone resin layer 105. In various alternative embodiments, the curing process may include adding one or more catalysts as well as exposing the curable silicone resin composition to elevated temperatures.

For example a silicone resin formed by co-hydrolyzing a mixture of PhSiCl₃, MeSiCl₃, PhMeSiCl₂, and Ph₂SiCl₂ in toluene with water, washing the hydrolyzate with deionized water, and heat bodying the hydrolyzate and drying the resin (Resin-1), can be dissolved in methyl isobutyl ketone (MIBK). The MIBK solution of the resin is mixed with 0.2 wt.% zinc octoate, and is coated onto a stainless steel foil by dipping, spin coating, drawing down coating, extrusion coating, reverse graveur coating, or any other coating method. The coated stainless steel foil can be cured in air in an oven. The curing temperature ranges from 177 °C to 350 °C. Curing time is from 30 minutes to 2 hours. Another example is a T^{Me}/SiO₂ resin. The resin is a partially condensed resin dispersion of the hydrolyzate of MeSi(OMe)₃ in a isopropal alcohol dispersion of nano silica particles of 15 nm in diameter. The resin is coated similarly onto a substrate, such as stainless steel, and cured in air in an oven at 125 °C for 1 hour.

The (cured or partially cured) silicone resin layer 105 is formed to have a thickness (T) that is less than a ductile transition thickness (T_{d}) of the cured or partially cured silicone resin that is used to form the silicone resin layer 105. As used herein and in accordance with common usage in the art, the term "ductile transition thickness" will be used to refer to the thickness at which a layer formed of a silicone resin transitions from a brittle state to a more ductile state. As used herein and in accordance with common usage in the art, the term "brittle" will refer to materials that exhibit an approximately linear relationship between an applied force and a displacement during a tensile strength test up to a critical point at which the material begins cracking, breaking, or crazing. In contrast, the term "ductile" will be used herein in accordance with common usage in the art to refer to materials that exhibit significant elongation before break and/or shear yielding in response to an applied force during a tensile strength test.

The actual value of the ductile transition thickness depends upon the composition of the silicone resin as well as the curing process used to form the silicone resin layer. For example, when cured at a temperature of approximately 250°C, a silicone resin layer 105 formed of Resin-1 may be brittle at thicknesses larger than a ductile transition thickness of approximately 10 µm and may be ductile at thicknesses less than the ductile transition thickness of approximately 10 µm. In contrast, when cured at a temperature of 200°C, the ductile transition thickness of Resin-1 may decrease to approximately 2-3 µm. The ductile transition thickness varies with the type of resin also. For example, the T^{Me}/SiO₂ resin mentioned above, when cured with the mentioned conditions, will have a ductile transition thickness of approximately 200 nm.

The curable silicone resin composition described above is only one example of a composition that may be used to form the silicone resin layer 105. In alternative embodiments, the curable silicone resin composition may be a hydrosilylation-curable silicone composition that can be any hydrosilylation-curable silicone composition comprising a silicone resin. Such compositions typically contain a silicone resin having silicon-bonded alkenyl groups or silicon-bonded hydrogen atoms, a cross-linking agent having silicon-bonded hydrogen atoms or silicon-bonded alkenyl groups capable of reacting with the silicon-bonded alkenyl groups or silicon-bonded hydrogen atoms in the resin, and a hydrosilylation catalyst. The silicone resin is typically a copolymer containing T and/or Q siloxane units in combination with M and/or D siloxane units. Moreover, the silicone resin can be a rubber-modified silicone resin, described below for the fifth and sixth embodiments of the silicone composition. As discussed above, the value of the ductile transition thickness of layers formed using the curable silicone resin compositions described below may depend upon the composition of the silicone resin as well as the curing process used to form the layer.

According to a first embodiment, the hydrosilylation-curable silicone composition comprises (A) a silicone resin having the formula (R¹R²₂SiO_{1/2})_{w}(R²₂SiO_{2/2})ₓ (R₁SiO_{3/2})_{y}(SiO_{4/2})_{z} (I), wherein R¹is C1 to C10 hydrocarbyl or C1 to C10 halogen-substituted hydrocarbyl, both free of aliphatic unsaturation, R² is R¹ or alkenyl, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin has an average of at least two silicon-bonded alkenyl groups per molecule; (B) an organosilicon compound having an average of at least two silicon-bonded hydrogen atoms per molecule in an amount sufficient to cure the silicone resin; and (C) a catalytic amount of a hydrosilylation catalyst.

Component (A) is at least one silicone resin having the formula (R¹R²₂SiO_{1/2})_{w} (R²₂SiO_{2/2})ₓ(R¹SiO_{3/2})_{y}(SiO_{4/2})_{z} (I), wherein R¹is C1 to C10 hydrocarbyl or C1 to C10 halogen-substituted hydrocarbyl, both free of aliphatic unsaturation, R² is R¹ or alkenyl, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin has an average of at least two silicon-bonded alkenyl groups per molecule.

The hydrocarbyl and halogen-substituted hydrocarbyl groups represented by R¹ are free of aliphatic unsaturation and typically have from 1 to 10 carbon atoms, alternatively from 1 to 6 carbon atoms. Acyclic hydrocarbyl and halogen-substituted hydrocarbyl groups containing at least 3 carbon atoms can have a branched or unbranched structure. Examples of hydrocarbyl groups represented by R¹ include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl, such as cyclopentyl, cyclohexyl, and methylcyclohexyl; aryl, such as phenyl and naphthyl; alkaryl, such as tolyl and xylyl; and aralkyl, such as benzyl and phenethyl. Examples of halogen-substituted hydrocarbyl groups represented by R1 include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

The alkenyl groups represented by R², which may be the same or different, typically have from 2 to about 10 carbon atoms, alternatively from 2 to 6 carbon atoms, and are exemplified by, but not limited to, vinyl, allyl, butenyl, hexenyl, and octenyl.

In the formula (I) of the silicone resin, the subscripts w, x, y, and z are mole fractions. The subscript w typically has a value of from 0 to 0.8, alternatively from 0.02 to 0.75, alternatively from 0.05 to 0.3; the subscript x typically has a value of from 0 to 0.6, alternatively from 0 to 0.45, alternatively from 0 to 0.25; the subscript y typically has a value of from 0 to 0.99, alternatively from 0.25 to 0.8, alternatively from 0.5 to 0.8; the subscript z typically has a value of from 0 to 0.75, alternatively from 0 to 0.55, alternatively from 0 to 0.25. Also, the ratio y+z/(w+x+y+z) is typically from 0.2 to 0.99, alternatively from 0.5 to 0.95, alternatively from 0.65 to 0.9. Further, the ratio w+x/(w+x+y+z) is typically from 0.01 to 0.80, alternatively from 0.05 to 0.5, alternatively from 0.1 to 0.35.

Typically at least 50 mol%, alternatively at least 65 mol%, alternatively at least 80 mol% of the groups R² in the silicone resin are alkenyl.

The silicone resin typically has a number-average molecular weight (Mn) of from 500 to 50,000, alternatively from 500 to 10,000, alternatively 1,000 to 3,000, where the molecular weight is determined by gel permeation chromatography employing a low angle laser light scattering detector, or a refractive index detector and silicone resin (MQ) standards.

The viscosity of the silicone resin at 25 °C is typically from 0.01 to 100,000 Pa^{.}s, alternatively from 0.1 to 10,000 Pa^{.}s, alternatively from 1 to 200 Pa^{.}s.

The silicone resin typically contains less than 10% (w/w), alternatively less than 5% (w/w), alternatively less than 2% (w/w), of silicon-bonded hydroxy groups, as determined by ²⁹Si NMR.

The silicone resin contains R¹SiO_{3/2} units (i.e., T units) and/or SiO_{4/2} units (i.e., Q units) in combination with R¹R²₂SiO_{1/2} units (i.e., M units) and/or R²₂SiO_{2/2} units (i.e., D units), where R¹ and R² are as described and exemplified above. For example, the silicone resin can be a DT resin, an MT resin, an MDT resin, a DTQ resin, and MTQ resin, and MDTQ resin, a DQ resin, an MQ resin, a DTQ resin, an MTQ resin, or an MDQ resin.

Examples of silicone resins include, but are not limited to, resins having the following formulae:
(Vi₂MeSiO_{1/2})_{0.25}(PhSiO_{3/2})_{0.75,} (ViMe₂SiO_{1/2})₀.₂₅(PhSiO_{3/2})_{0.75,} (ViMe₂SiO_{1/2})_{0.25}(MeSiO_{3/2})_{0.25}(PhSiO_{3/2})_{0.50,} (ViMe₂SiO_{1/2})_{0.15}(PhSiO_{3/2})_{0.75} (SiO_{4/2})_{0.1}, and (Vi₂MeSiO_{1/2})_{0.15}(ViMe₂SiO_{1/2})_{0.1}(PhSiO_{3/2})_{0.75}, where Me is methyl, Vi is vinyl, Ph is phenyl, and the numerical subscripts outside the parenthesis denote mole fractions. Also, in the preceding formulae, the sequence of units is unspecified.

Component (A) can be a single silicone resin or a mixture comprising two or more different silicone resins, each as described above.

Methods of preparing silicone resins are well known in the art; many of these resins are commercially available. Silicone resins are typically prepared by cohydrolyzing the appropriate mixture of chlorosilane precursors in an organic solvent, such as toluene. For example, a silicone resin consisting essentially of R¹R²₂SiO_{1,2} units and R¹SiO_{3/2} units can be prepared by cohydrolyzing a compound having the formula R¹R²₂SiCl and a compound having the formula R¹SiCl₃ in toluene, where R¹ and R² are as defined and exemplified above. The aqueous hydrochloric acid and silicone hydrolyzate are separated and the hydrolyzate is washed with water to remove residual acid and heated in the presence of a mild condensation catalyst to "body" the resin to the requisite viscosity. If desired, the resin can be further treated with a condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and -SCH₃, can be utilized as starting materials in the cohydrolysis reaction. The properties of the resin products depend on the types of silanes, the mole ratio of silanes, the degree of condensation, and the processing conditions.

Component (B) is at least one organosilicon compound having an average of at least two silicon-bonded hydrogen atoms per molecule in an amount sufficient to cure the silicone resin of component (A).

The organosilicon compound has an average of at least two silicon-bonded hydrogen atoms per molecule, alternatively at least three silicon-bonded hydrogen atoms per molecule. It is generally understood that cross-linking occurs when the sum of the average number of alkenyl groups per molecule in component (A) and the average number of silicon-bonded hydrogen atoms per molecule in component (B) is greater than four.

The organosilicon compound can be an organohydrogensilane or an organohydrogensiloxane. The organohydrogensilane can be a monosilane, disilane, trisilane, or polysilane. Similarly, the organohydrogensiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded hydrogen atoms can be located at terminal, pendant, or at both terminal and pendant positions.

Examples of organohydrogensilanes include, but are not limited to, diphenylsilane, 2-chloroethylsilane, bis[(p-dimethylsilyl)phenyl]ether, 1,4-dimethyldisilylethane, 1,3,5-tris(dimethylsilyl)benzene, 1,3,5-trimethyl-1,3,5-trisilane, poly(methylsilylene)phenylene, and poly(methylsilylene)methylene.

The organohydrogensilane can also have the formula HR¹₂Si-R³-SiR¹₂H, wherein R¹ is C1 to C10 hydrocarbyl or C1 to C10 halogen-substituted hydrocarbyl, both free of aliphatic unsaturation, and R³ is a hydrocarbylene group free of aliphatic unsaturation having a formula selected from: 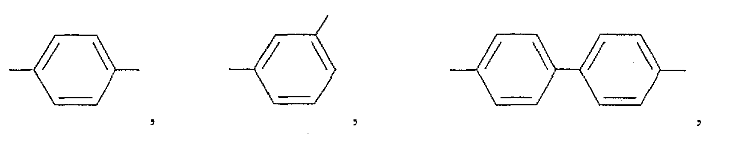 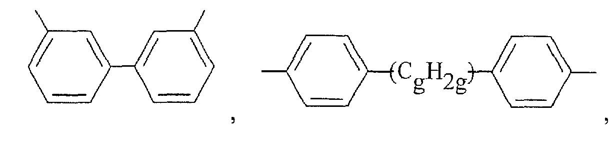 and 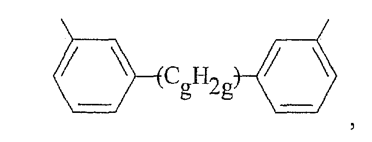 wherein g is from 1 to 6. The hydrocarbyl and halogen-substituted hydrocarbyl groups represented by R¹ are as defined and exemplified above for the silicone resin of component (A).

Examples of organohydrogensilanes having the formula HR¹₂Si-R³-SiR¹₂H, wherein R¹ and R³ are as described and exemplified above include, but are not limited to, silanes having the following formulae: 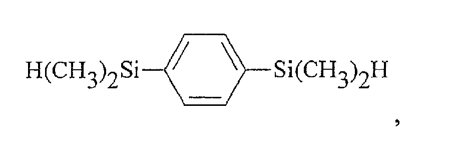 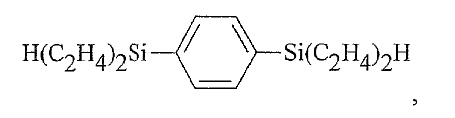 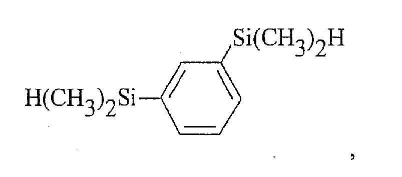 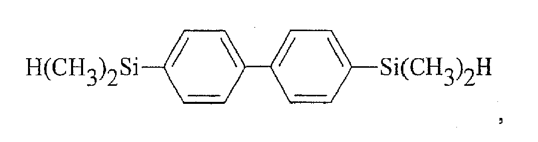 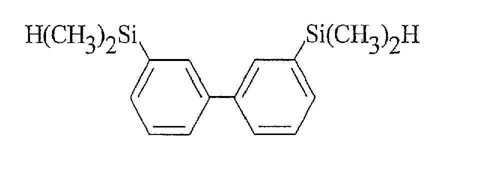 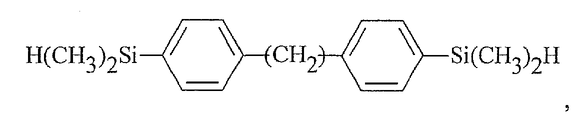 and

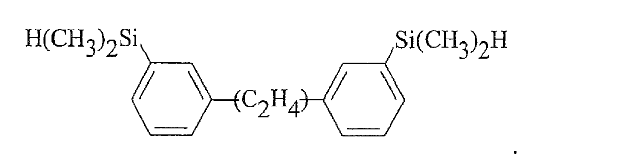

Examples of organohydrogensiloxanes include, but are not limited to, 1,1,3,3-tetramethyldisiloxane, 1,1,3,3-tetraphenyldisiloxane, phenyltris(dimethylsiloxy)silane, 1,3,5-trimethylcyclotrisiloxane, a trimethylsiloxy-terminated poly(methylhydrogensiloxane), a trimethylsiloxy-terminated poly(dimethylsiloxane/methylhydrogensiloxane), a dimethylhydrogensiloxy-terminated poly(methylhydrogensiloxane), and a resin consisting essentially of HMe₂SiO_{1/2} units, Me₃SiO_{1/2} units, and SiO_{4/2} units, wherein Me is methyl.

The organohydrogensiloxane can also be an organohydrogenpolysiloxane resin having he formula (R¹R⁴₂SiO_{1/2})_{w}(R⁴₂SiO_{2/2})ₓ(R¹SiO_{3/2})_{y}(SiO_{4/2})_{z} (II), wherein R¹ is C1 to C10 hydrocarbyl or C1 to C10 halogen-substituted hydrocarbyl, both free of aliphatic unsaturation, R⁴ is R¹ or an organosilylalkyl group having at least one silicon-bonded hydrogen atom, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided at least 50 mol% of the groups R4 are organosilylalkyl.

The hydrocarbyl and halogen-substituted hydrocarbyl groups represented by R¹ are as described and exemplified above for the silicone resin of component (A). Examples of organosilylalkyl groups represented by R⁴ include, but are not limited to, groups having the following formulae: 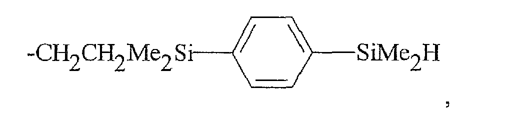 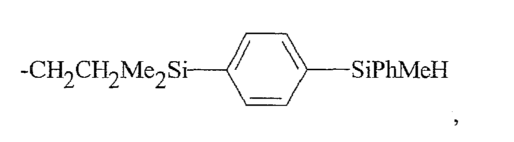 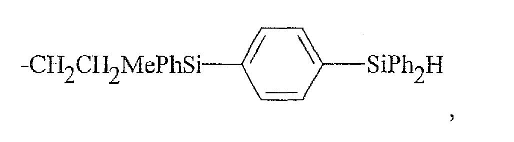 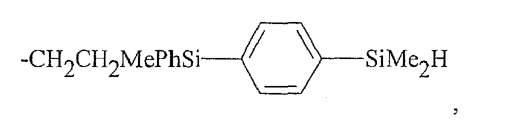
- CH₂CH₂SiMe₂H,
- CH₂CH₂SiMe₂CₙH₂ₙSiMe₂H,
- CH₂CH₂SiMe₂CₙH₂ₙSiMePhH,
- CH₂CH₂SiMePhH,
- CH₂CH₂SiPh₂H,
- CH₂CH₂SiMePhCₙH₂ₙSiPh₂H,
- CH₂CH₂SiMePhCₙH₂ₙSiMe₂H,
- CH₂CH₂SiMePhOSiMePhH, and
- CH₂CH₂SiMePhOSiPh(OSiMePhH)₂, where Me is methyl, Ph is phenyl, and the subscript n has a value of from 2 to 10.

In the formula (II) of the organohydrogenpolysiloxane resin, the subscripts w, x, y, and z are mole fractions. The subscript w typically has a value of from 0 to 0.8, alternatively from 0.02 to 0.75, alternatively from 0.05 to 0.3; the subscript x typically has a value of from 0 to 0.6, alternatively from 0 to 0.45, alternatively from 0 to 0.25; the subscript y typically has a value of from 0 to 0.99, alternatively from 0.25 to 0.8, alternatively from 0.5 to 0.8; the subscript z typically has a value of from 0 to 0.75, alternatively from 0 to 0.55, alternatively from 0 to 0.25. Also, the ratio y+z/(w+x+y+z) is typically from 0.2 to 0.99, alternatively from 0.5 to 0.95, alternatively from 0.65 to 0.9. Further, the ratio w+x/(w+x+y+z) is typically from 0.01 to 0.80, alternatively from 0.05 to 0.5, alternatively from 0.1 to 0.35.

Typically, at least 50 mol%, alternatively at least 65 mol%, alternatively at least 80 mol% of the groups R⁴ in the organohydrogenpolysiloxane resin are organosilylalkyl groups having at least one silicon-bonded hydrogen atom.

The organohydrogenpolysiloxane resin typically has a number-average molecular weight (Mn) of from 500 to 50,000, alternatively from 500 to 10,000, alternatively 1,000 to 3,000, where the molecular weight is determined by gel permeation chromatography employing a low angle laser light scattering detector, or a refractive index detector and silicone resin (MQ) standards.

The organohydrogenpolysiloxane resin typically contains less than 10% (w/w), alternatively less than 5% (w/w), alternatively less than 2% (w/w), of silicon-bonded hydroxy groups, as determined by ²⁹Si NMR.

The organohydrogenpolysiloxane resin contains R¹SiO_{3/2} units (i.e., T units) and/or SiO_{4/2} units (i.e., Q units) in combination with R¹R⁴₂SiO_{1/2} units (i.e., M units) and/or R⁴₂SiO_{2/2} units (i.e., D units), where R¹ and R⁴ are as described and exemplified above. For example, the organohydrogenpolysiloxane resin can be a DT resin, an MT resin, an MDT resin, a DTQ resin, and MTQ resin, and MDTQ resin, a DQ resin, an MQ resin, a DTQ resin, an MTQ resin, or an MDQ resin.

Examples of organohydrogenpolysiloxane resins include, but are not limited to, resins having the following formulae:
((HMe₂SiC₆H₄SiMe₂CH₂CH₂)₂MeSiO_{1/2})_{0.12}(PhSiO_{3/2})_{0.88},
((HMe₂SiC₆H₄SiMe₂CH₂CH₂)₂MeSiO_{1/2})_{0.17}(PhSiO_{3/2})_{0.83},
((HMe₂SiC₆H₄SiMe₂CH₂CH₂)₂MeSiO_{1/2})_{0.17}(MeSiO_{3/2})_{0.17}(PhSiO_{3/2})_{0.66},
((HMe₂SiC₆H₄SiMe₂CH₂CH₂)₂MeSiO_{1/2})_{0.15}(PhSiO_{3/2})_{0.75}(SiO_{4/2})_{0.10}, and
((HMe₂SiC₆H₄SiMe₂CH₂CH₂)₂MeSiO_{1/2})_{0.08}((HMe₂SiC₆H₄SiMe₂CH₂CH₂)Me₂SiO_{1/2})_{0.06}
(PhSiO_{3/2})_{0.86}, where Me is methyl, Ph is phenyl, C₆H₄ denotes a para-phenylene group, and the numerical subscripts outside the parenthesis denote mole fractions. Also, in the preceding formulae, the sequence of units is unspecified.

Component (B) can be a single organosilicon compound or a mixture comprising two or more different organosilicon compounds, each as described above. For example, component (B) can be a single organohydrogensilane, a mixture of two different organohydrogensilanes, a single organohydrogensiloxane, a mixture of two different organohydrogensiloxanes, or a mixture of an organohydrogensilane and an organohydrogensiloxane. In particular, component (B) can be a mixture comprising at least 0.5% (w/w), alternatively at least 50% (w/w), alternatively at least 75% (w/w), based on the total weight of component (B), of the organohydrogenpolysiloxane resin having the formula (II), and an organohydrogensilane and/or organohydrogensiloxane, the latter different from the organohydrogenpolysiloxane resin.

The concentration of component (B) is sufficient to cure (cross-link) the silicone resin of component (A). The exact amount of component (B) depends on the desired extent of cure, which generally increases as the ratio of the number of moles of silicon-bonded hydrogen atoms in component (B) to the number of moles of alkenyl groups in component (A) increases. The concentration of component (B) is typically sufficient to provide from 0.4 to 2 moles of silicon-bonded hydrogen atoms, alternatively from 0.8 to 1.5 moles of silicon-bonded hydrogen atoms, alternatively from 0.9 to 1.1 moles of silicon-bonded hydrogen atoms, per mole of alkenyl groups in component (A).

Methods of preparing organosilicon compounds containing silicon-bonded hydrogen atoms are well known in the art. For example, organohydrogensilanes can be prepared by reaction of Grignard reagents with alkyl or aryl halides. In particular, organohydrogensilanes having the formula HR¹₂Si-R³-SiR¹₂H can be prepared by treating an aryl dihalide having the formula R³X₂ with magnesium in ether to produce the corresponding Grignard reagent and then treating the Grignard reagent with a chlorosilane having the formula HR¹₂SiCl, where R¹ and R³ are as described and exemplified above.

Methods of preparing organohydrogensiloxanes, such as the hydrolysis and condensation of organohalosilanes, are also well known in the art.

In addition, the organohydrogenpolysiloxane resin having the formula (II) can be prepared by reacting (a) a silicone resin having the formula (R¹R²₂SiO_{1/2})_{w}(R²₂SiO_{2/2})ₓ (R¹SiO_{3/2})_{y}(SiO_{4/2})_{z} (I) with (b) an organosilicon compound having an average of from two to four silicon-bonded hydrogen atoms per molecule and a molecular weight less than 1,000, in the presence of (c) a hydrosilylation catalyst and, optionally, (d) an organic solvent, wherein R¹ is C1 to C10 hydrocarbyl or C1 to C10 halogen-substituted hydrocarbyl, both free of aliphatic unsaturation, R² is R¹ or alkenyl, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin (a) has an average of at least two silicon-bonded alkenyl groups per molecule, and the mole ratio of silicon-bonded hydrogen atoms in (b) to alkenyl groups in (a) is from 1.5 to 5.

Silicone resin (a) is as described and exemplified above for component (A) of the silicone composition. Silicone resin (a) can be the same as or different than the silicone resin used as component (A) in the hydrosilylation-curable silicone composition.

Organosilicon compound (b) is at least one organosilicon compound having an average of from two to four silicon-bonded hydrogen atoms per molecule. Alternatively, the organosilicon compound has an average of from two to three silicon-bonded hydrogen atoms per molecule. The organosilicon compound typically has a molecular weight less than 1,000, alternatively less than 750, alternatively less than 500. The silicon-bonded organic groups in the organosilicon compound are selected from hydrocarbyl and halogen-substituted hydrocarbyl groups, both free of aliphatic unsaturation, which are as described and exemplified above for R¹ in the formula of the silicone resin of component (A).

Organosilicon compound (b) can be an organohydrogensilane or an organohydrogensiloxane. The organohydrogensilane can be a monosilane, disilane, trisilane, or polysilane. Similarly, the organohydrogensiloxane can be a disiloxane, trisiloxane, or polysiloxane. The structure of the organosilicon compound can be linear, branched, or cyclic. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded hydrogen atoms can be located at terminal, pendant, or at both terminal and pendant positions.

Examples of organohydrogensilanes include, but are not limited to, diphenylsilane, 2-chloroethylsilane, bis[(p-dimethylsilyl)phenyl]ether, 1,4-dimethyldisilylethane, 1,3,5-tris(dimethylsilyl)benzene, and 1,3,5-trimethyl-1,3,5-trisilane. The organohydrogensilane can also have the formula HR¹₂Si-R³-SiR¹₂H, wherein R¹ and R³ are as described and exemplified above.

Examples of organohydrogensiloxanes include, but are not limited to, 1,1,3,3-tetramethyldisiloxane, 1,1,3,3-tetraphenyldisiloxane, phenyltris(dimethylsiloxy)silane, and 1,3,5-trimethylcyclotrisiloxane.

Organosilicon compound (b) can be a single organosilicon compound or a mixture comprising two or more different organosilicon compounds, each as described above. For example, component (B) can be a single organohydrogensilane, a mixture of two different organohydrogensilanes, a single organohydrogensiloxane, a mixture of two different organohydrogensiloxanes, or a mixture of an organohydrogensilane and an organohydrogensiloxane.

Methods of preparing organohydrogensilanes, such as the reaction of Grignard reagents with alkyl or aryl halides, described above, are well known in the art. Similarly, methods of preparing organohydrogensiloxanes, such as the hydrolysis and condensation of organohalosilanes, are well known in the art.

Hydrosilylation catalyst (c) can be any of the well-known hydrosilylation catalysts comprising a platinum group metal (i.e., platinum, rhodium, ruthenium, palladium, osmium and iridium) or a compound containing a platinum group metal. Preferably, the platinum group metal is platinum, based on its high activity in hydrosilylation reactions.

Hydrosilylation catalysts include the complexes of chloroplatinic acid and certain vinyl-containing organosiloxanes disclosed by Willing in U.S. Pat. No. 3,419,593, which is hereby incorporated by reference. A catalyst of this type is the reaction product of chloroplatinic acid and 1,3-diethenyl-1,1,3,3-tetramethyldisiloxane.

The hydrosilylation catalyst can also be a supported hydrosilylation catalyst comprising a solid support having a platinum group metal on the surface thereof. A supported catalyst can be conveniently separated from the organohydrogenpolysiloxane resin product, for example, by filtering the reaction mixture. Examples of supported catalysts include, but are not limited to, platinum on carbon, palladium on carbon, ruthenium on carbon, rhodium on carbon, platinum on silica, palladium on silica, platinum on alumina, palladium on alumina, and ruthenium on alumina.

Organic solvent (d) is at least one organic solvent. The organic solvent can be any aprotic or dipolar aprotic organic solvent that does not react with silicone resin (a), organosilicon compound (b), or the organohydrogenpolysiloxane resin under the conditions of the present method, and is miscible with components (a), (b), and the organohydrogenpolysiloxane resin.

Examples of organic solvents include, but are not limited to, saturated aliphatic hydrocarbons such as n-pentane, hexane, n-heptane, isooctane and dodecane; cycloaliphatic hydrocarbons such as cyclopentane and cyclohexane; aromatic hydrocarbons such as benzene, toluene, xylene and mesitylene; cyclic ethers such as tetrahydrofuran (THF) and dioxane; ketones such as methyl isobutyl ketone (MIBK); halogenated alkanes such as trichloroethane; and halogenated aromatic hydrocarbons such as bromobenzene and chlorobenzene. Organic solvent (d) can be a single organic solvent or a mixture comprising two or more different organic solvents, each as described above.

The reaction can be carried out in any standard reactor suitable for hydrosilylation reactions. Suitable reactors include glass and Teflon-lined glass reactors. Preferably, the reactor is equipped with a means of agitation, such as stirring. Also, preferably, the reaction is carried out in an inert atmosphere, such as nitrogen or argon, in the absence of moisture.

The silicone resin, organosilicon compound, hydrosilylation catalyst, and, optionally, organic solvent, can be combined in any order. Typically, organosilicon compound (b) and hydrosilylation catalyst (c) are combined before the introduction of the silicone resin (a) and, optionally, organic solvent (d).

The reaction is typically carried out at a temperature of from 0 to 150 °C, alternatively from room temperature (∼23 ± 2 °C) to 115 °C. When the temperature is less than 0 °C, the rate of reaction is typically very slow.

The reaction time depends on several factors, such as the structures of the silicone resin and the organosilicon compound, and the temperature. The time of reaction is typically from 1 to 24 h at a temperature of from room temperature (∼23 ±2 °C) to 150 °C. The optimum reaction time can be determined by routine experimentation

The mole ratio of silicon-bonded hydrogen atoms in organosilicon compound (b) to alkenyl groups in silicone resin (a) is typically from 1.5 to 5, alternatively from 1.75 to 3, alternatively from 2 to 2.5.

The concentration of hydrosilylation catalyst (c) is sufficient to catalyze the addition reaction of silicone resin (a) with organosilicon compound (b). Typically, the concentration of hydrosilylation catalyst (c) is sufficient to provide from 0.1 to 1000 ppm of a platinum group metal, alternatively from 1 to 500 ppm of a platinum group metal, alternatively from 5 to 150 ppm of a platinum group metal, based on the combined weight of silicone resin (a) and organosilicon compound (b). The rate of reaction is very slow below 0.1 ppm of platinum group metal. The use of more than 1000 ppm of platinum group metal results in no appreciable increase in reaction rate, and is therefore uneconomical.

The concentration of organic solvent (d) is typically from 0 to 99% (w/w), alternatively from 30 to 80% (w/w), alternatively from 45 to 60% (w/w), based on the total weight of the reaction mixture.

The organohydrogenpolysiloxane resin can be used without isolation or purification in the first embodiment of the hydrosilylation-curable silicone composition or the resin can be separated from most of the solvent by conventional methods of evaporation. For example, the reaction mixture can be heated under reduced pressure. Moreover, when the hydrosilylation catalyst used to prepare the organohydrogenpolysiloxane resin is a supported catalyst, described above, the resin can be readily separated from the hydrosilylation catalyst by filtering the reaction mixture. However, when the organohydrogenpolysiloxane resin is not separated from the hydrosilylation catalyst used to prepare the resin, the catalyst may be used as component (C) of the first embodiment of the hydrosilylation-curable silicone composition.

Component (C) of the hydrosilylation-curable silicone composition is at least one hydrosilylation catalyst that promotes the addition reaction of component (A) with component (B). The hydrosilylation catalyst can be any of the well-known hydrosilylation catalysts comprising a platinum group metal, a compound containing a platinum group metal, or a microencapsulated platinum group metal-containing catalyst. Platinum group metals include platinum, rhodium, ruthenium, palladium, osmium and iridium. Preferably, the platinum group metal is platinum, based on its high activity in hydrosilylation reactions.

Preferred hydrosilylation catalysts include the complexes of chloroplatinic acid and certain vinyl-containing organosiloxanes disclosed by Willing in U.S. Pat. No. 3,419,593, which is hereby incorporated by reference. A preferred catalyst of this type is the reaction product of chloroplatinic acid and 1,3-diethenyl-1,1,3,3-tetramethyldisiloxane.

The hydrosilylation catalyst can also be a microencapsulated platinum group metal-containing catalyst comprising a platinum group metal encapsulated in a thermoplastic resin. Compositions containing microencapsulated hydrosilylation catalysts are stable for extended periods of time, typically several months or longer, under ambient conditions, yet cure relatively rapidly at temperatures above the melting or softening point of the thermoplastic resin(s). Microencapsulated hydrosilylation catalysts and methods of preparing them are well known in the art, as exemplified in U.S. Pat. No. 4,766,176 and the references cited therein; and U.S. Pat. No. 5,017,654.

Component (C) can be a single hydrosilylation catalyst or a mixture comprising two or more different catalysts that differ in at least one property, such as structure, form, platinum group metal, complexing ligand, and thermoplastic resin.

The concentration of component (C) is sufficient to catalyze the addition reaction of component (A) with component (B). Typically, the concentration of component (C) is sufficient to provide from 0.1 to 1000 ppm of a platinum group metal, preferably from 1 to 500 ppm of a platinum group metal, and more preferably from 5 to 150 ppm of a platinum group metal, based on the combined weight of components (A) and (B). The rate of cure is very slow below 0.1 ppm of platinum group metal. The use of more than 1000 ppm of platinum group metal results in no appreciable increase in cure rate, and is therefore uneconomical.

According to a second embodiment, the hydrosilylation-curable silicone composition comprises (A') a silicone resin having the formula (R¹R⁵₂SiO_{1/2})_{w} (R⁵₂SiO_{2/2})ₓ(R⁵SiO_{3/2})_{y}(SiO_{4/2})_{z} (III), wherein R¹is C1 to C10 hydrocarbyl or C1 to C10 halogen-substituted hydrocarbyl, both free of aliphatic unsaturation, R⁵ is R¹ or -H, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin has an average of at least two silicon-bonded hydrogen atoms per molecule; (B') an organosilicon compound having an average of at least two silicon-bonded alkenyl groups per molecule in an amount sufficient to cure the silicone resin; and (C) a catalytic amount of a hydrosilylation catalyst.

Component (A') is at least one silicone resin having the formula (R¹R⁵₂SiO_{1/2})_{w} (R⁵₂SiO_{2/2})ₓ(R⁵SiO_{3/2})_{y}(SiO_{4/2})_{z} (III), wherein R¹ is C1 to C10 hydrocarbyl or C1 to C10 halogen-substituted hydrocarbyl, both free of aliphatic unsaturation, R⁵ is R¹ or -H, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin has an average of at least two silicon-bonded hydrogen atoms per molecule. In the formula (III), R¹, w, x, y, z, y+z/(w+x+y+z), and w+x/(w+x+y+z) are as described and exemplified above for the silicone resin having the formula (I).

Typically at least 50 mol%, alternatively at least 65 mol%, alternatively at least 80 mol% of the groups R⁵ in the silicone resin are hydrogen.

The silicone resin typically has a number-average molecular weight (Mn) of from 500 to 50,000, alternatively from 500 to 10,000, alternatively 1,000 to 3,000, where the molecular weight is determined by gel permeation chromatography employing a low angle laser light scattering detector, or a refractive index detector and silicone resin (MQ) standards.

The viscosity of the silicone resin at 25 °C is typically from 0.01 to 100,000 Pa-s, alternatively from 0. 1 to 10,000 Pa^{.}s, alternatively from 1 to 100 Pa-s.

The silicone resin typically contains less than 10% (w/w), alternatively less than 5% (w/w), alternatively less than 2% (w/w), of silicon-bonded hydroxy groups, as determined by ²⁹Si NMR.

The silicone resin contains R⁵SiO_{3/2} units (i.e., T units) and/or SiO_{4/2} units (i.e., Q units) in combination with R¹R⁵₂SiO_{1/2} units (i.e., M units) and/or R⁵₂SiO_{2/2} units (i.e., D units). For example, the silicone resin can be a DT resin, an MT resin, an MDT resin, a DTQ resin, and MTQ resin, and MDTQ resin, a DQ resin, an MQ resin, a DTQ resin, an MTQ resin, or an MDQ resin.

Examples of silicone resins suitable for use as component (A') include, but are not limited to, resins having the following formulae:
(HMe₂SiO_{1/2})₀.₂₅(PhSiO_{3/2})_{0.75}, (HMeSiO_{2/2})₀.₃(PhSiO_{3/2})₀.₆(MeSiO_{3/2})_{0.1}, and (Me₃SiO_{1/2})_{0.1}(H₂SiO_{2/2})_{0.1}(MeSiO_{3/2})_{0.4}(PhSiO_{3/2})_{0.4}, where Me is methyl, Ph is phenyl, and the numerical subscripts outside the parenthesis denote mole fractions. Also, in the preceding formulae, the sequence of units is unspecified.

Component (A') can be a single silicone resin or a mixture comprising two or more different silicone resins, each as described above.

Methods of preparing silicone resins containing silicon-bonded hydrogen atoms are well known in the art; many of these resins are commercially available. Silicone resins are typically prepared by cohydrolyzing the appropriate mixture of chlorosilane precursors in an organic solvent, such as toluene. For example, a silicone resin consisting essentially of R¹R⁵₂SiO_{1/2} units and R⁵SiO_{3/2} units can be prepared by cohydrolyzing a compound having the formula R¹R⁵₂SiCl and a compound having the formula R⁵SiCl₃ in toluene, where R¹ and R⁵ are as described and exemplified above. The aqueous hydrochloric acid and silicone hydrolyzate are separated and the hydrolyzate is washed with water to remove residual acid and heated in the presence of a mild non-basic condensation catalyst to "body" the resin to the requisite viscosity. If desired, the resin can be further treated with a non-basic condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and -SCH₃, can be utilized as starting materials in the cohydrolysis reaction. The properties of the resin products depend on the types of silanes, the mole ratio of silanes, the degree of condensation, and the processing conditions.

Component (B') is at least one organosilicon compound having an average of at least two silicon-bonded alkenyl groups per molecule in an amount sufficient to cure the silicone resin of component (A').

The organosilicon compound contains an average of at least two silicon-bonded alkenyl groups per molecule, alternatively at least three silicon-bonded alkenyl groups per molecule. It is generally understood that cross-linking occurs when the sum of the average number of silicon-bonded hydrogen atoms per molecule in component (A') and the average number of silicon-bonded alkenyl groups per molecule in component (B') is greater than four.

The organosilicon compound can be an organosilane or an organosiloxane. The organosilane can be a monosilane, disilane, trisilane, or polysilane. Similarly, the organosiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded alkenyl groups can be located at terminal, pendant, or at both terminal and pendant positions.

Examples of organosilanes suitable for use as component (B') include, but are not limited to, silanes having the following formulae:
Vi₄Si, PhSiVi₃, MeSiVi₃, PhMeSiVi₂, Ph₂SiVi₂, and PhSi(CH₂CH=CH₂)₃, where Me is methyl, Ph is phenyl, and Vi is vinyl.

Examples of organosiloxanes suitable for use as component (B') include, but are not limited to, siloxanes having the following formulae:
PhSi(OSiMe₂Vi)_{3,} Si(OSiMe₂Vi)₄, MeSi(OSiMe₂Vi)₃, and Ph₂Si(OSiMe₂Vi)₂, where Me is methyl, and Ph is phenyl.

Component (B') can be a single organosilicon compound or a mixture comprising two or more different organosilicon compounds, each as described above. For example component (B') can be a single organosilane, a mixture of two different organosilanes, a single organosiloxane, a mixture of two different organosiloxanes, or a mixture of an organosilane and an organosiloxane.

The concentration of component (B') is sufficient to cure (cross-link) the silicone resin of component (A'). The exact amount of component (B') depends on the desired extent of cure, which generally increases as the ratio of the number of moles of silicon-bonded alkenyl groups in component (B') to the number of moles of silicon-bonded hydrogen atoms in component (A') increases. The concentration of component (B') is typically sufficient to provide from 0.4 to 2 moles of silicon-bonded alkenyl groups, alternatively from 0.8 to 1.5 moles of silicon-bonded alkenyl groups, alternatively from 0.9 to 1.1 moles of silicon-bonded alkenyl groups, per mole of silicon-bonded hydrogen atoms in component (A').

Methods of preparing organosilanes and organosiloxanes containing silicon-bonded alkenyl groups are well known in the art; many of these compounds are commercially available.

Component (C) of the second embodiment of the silicone composition is as described and exemplified above for component (C) of the first embodiment.

According to a third embodiment, the hydrosilylation-curable silicone composition comprises (A) a silicone resin having the formula (R¹R²₂SiO_{1/2})_{w}(R²₂SiO_{2/2})ₓ (R¹SiO_{3/2})_{y}(SiO_{4/2})_{z} (I); (B) an organosilicon compound having an average of at least two silicon-bonded hydrogen atoms per molecule in an amount sufficient to cure the silicone resin; (C) a catalytic amount of a hydrosilylation catalyst; and (D) a silicone rubber having a formula selected from (i) R¹R²₂SiO(R²₂SiO)ₐSiR²₂R¹ (IV) and (ii) R⁵R¹₂SiO(R¹R⁵SiO)_{b}SiR¹₂R⁵ (V); wherein R¹ is C1 to C10 hydrocarbyl or C1 to C10 halogen-substituted hydrocarbyl, both free of aliphatic unsaturation, R² is R¹ or alkenyl, R⁵ is R¹ or -H, subscripts a and b each have a value of from 1 to 4, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin and the silicone rubber (D)(i) each have an average of at least two silicon-bonded alkenyl groups per molecule, the silicone rubber (D)(ii) has an average of at least two silicon-bonded hydrogen atoms per molecule, and the mole ratio of silicon-bonded alkenyl groups or silicon-bonded hydrogen atoms in the silicone rubber (D) to silicon-bonded alkenyl groups in the silicone resin (A) is from 0.01 to 0.5.

Components (A), (B), and (C) of the third embodiment of the silicone composition are as described and exemplified above for the first embodiment.

The concentration of component (B) is sufficient to cure (cross-link) the silicone resin of component (A). When component (D) is (D)(i), the concentration of component (B) is such that the ratio of the number of moles of silicon-bonded hydrogen atoms in component (B) to the sum of the number of moles of silicon-bonded alkenyl groups in component (A) and component (D)(i) is typically from 0.4 to 2, alternatively from 0.8 to 1.5, alternatively from 0.9 to 1.1. Furthermore, when component (D) is (D)(ii), the concentration of component (B) is such that the ratio of the sum of the number of moles of silicon-bonded hydrogen atoms in component (B) and component (D)(ii) to the number of moles of silicon-bonded alkenyl groups in component (A) is typically from 0.4 to 2, alternatively from 0.8 to 1.5, alternatively from 0.9 to 1.1.

Component (D) is a silicone rubber having a formula selected from (i) R¹R²₂SiO(R²₂SiO)ₐSiR²₂R¹ (IV) and (ii) R⁵R¹₂SiO(R¹R⁵SiO)_{b} SiR¹₂ R⁵ (V); wherein R¹ is C1 to C10 hydrocarbyl or C1 to C10 halogen-substituted hydrocarbyl, both free of aliphatic unsaturation, R² is R¹ or alkenyl, R⁵ is R¹ or —H, and subscripts a and b each have a value of from 1 to 4, provided the silicone rubber (D)(i) has an average of at least two silicon-bonded alkenyl groups per molecule, and the silicone rubber (D)(ii) has an average of at least two silicon-bonded hydrogen atoms per molecule.

Component (D)(i) is at least one silicone rubber having the formula R¹R²₂SiO(R²₂SiO)ₐSiR²₂R¹ (IV), wherein R¹ and R² are as described and exemplified above and the subscript a has a value of from 1 to 4, provided the silicone rubber (D)(i) has an average of at least two silicon-bonded alkenyl groups per molecule. Alternatively, the subscript a has a value of from 2 to 4 or from 2 to 3.

Examples of silicone rubbers suitable for use as component (D)(i) include, but are not limited to, silicone rubbers having the following formulae:
ViMe₂SiO(Me₂SiO)ₐSiMe₂Vi, ViMe₂SiO(Ph₂SiO)ₐSiMe₂ Vi, and ViMe₂SiO(PhMeSiO)ₐSiMe₂Vi, where Me is methyl, Ph is phenyl, Vi is vinyl, and the subscript a has a value of from 1 to 4.

Component (D)(i) can be a single silicone rubber or a mixture comprising two or more different silicone rubbers, each having the formula (IV).

Component (D)(ii) is at least one silicone rubber having the formula R⁵R¹₂SiO (R¹R⁵SiO)_{b}SiR¹₂R⁵ (V); wherein R¹ and R⁵ are as described and exemplified above, and the subscript b has a value of from 1 to 4, provided the silicone rubber (D)(ii) has an average of at least two silicon-bonded hydrogen atoms per molecule. Alternatively, the subscript b has a value of from 2 to 4 or from 2 to 3.

Examples of silicone rubbers suitable for use as component (D)(ii) include, but are not limited to, silicone rubbers having the following formulae:
HMe₂SiO(Me₂SiO)_{b}SiMe₂H, HMe₂SiO(Ph₂SiO)_{b}SiMe₂H, HMe₂SiO(PhMeSiO)_{b} SiMe₂H, and HMe₂SiO(Ph₂SiO)₂(Me₂SiO)₂SiMe₂H, where Me is methyl, Ph is phenyl, and the subscript b has a value of from 1 to 4.

Component (D)(ii) can be a single silicone rubber or a mixture comprising two or more different silicone rubbers, each having the formula (V).

The mole ratio of silicon-bonded alkenyl groups or silicon-bonded hydrogen atoms in the silicone rubber (D) to silicon-bonded alkenyl groups in the silicone resin (A) is typically from 0.01 to 0.5, alternatively from 0.05 to 0.4, alternatively from 0.1 to 0.3.

Methods of preparing silicone rubbers containing silicon-bonded alkenyl groups or silicon-bonded hydrogen atoms are well known in the art; many of these compounds are commercially available.

According to a fourth embodiment, the hydrosilylation-curable silicone composition comprises (A') a silicone resin having the formula (R¹R⁵₂SiO_{1/2})_{w}(R⁵₂ SiO_{2/2})ₓ (R⁵SiO_{3/2})_{y}(SiO_{4/2})_{z} (III); (B') an organosilicon compound having an average of at least two silicon-bonded alkenyl groups per molecule in an amount sufficient to cure the silicone resin; (C) a catalytic amount of a hydrosilylation catalyst; and (D) a silicone rubber having a formula selected from (i) R¹R²₂SiO(R²₂SiO)ₐSiR²₂R¹ (IV) and (ii) R⁵R¹₂SiO(R¹R⁵SiO)_{b} SiR¹₂R₅ (V); wherein R¹ is C1 to C10 hydrocarbyl or C1 to C10 halogen-substituted hydrocarbyl, both free of aliphatic unsaturation, R² is R¹ or alkenyl, R⁵ is R¹ or -H, subscripts a an b each have a value of from 1 to 4, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin and the silicone rubber (D)(ii) each have an average of at least two silicon-bonded hydrogen atoms per molecule, the silicone rubber (D)(i) has an average of at least two silicon-bonded alkenyl groups per molecule, and the mole ratio of silicon-bonded alkenyl groups or silicon-bonded hydrogen atoms in the silicone rubber (D) to silicon-bonded hydrogen atoms in the silicone resin (A') is from 0.01 to 0.5.

Components (A'), (B'), and (C) of the fourth embodiment of the silicone composition are as described and exemplified above for the second embodiment, and component (D) of the fourth embodiment is as described and exemplified above for the third embodiment.

The concentration of component (B') is sufficient to cure (cross-link) the silicone resin of component (A'). When component (D) is (D)(i), the concentration of component (B') is such that the ratio of the sum of the number of moles of silicon-bonded alkenyl groups in component (B') and component (D)(i) to the number of moles of silicon-bonded hydrogen atoms in component (A') is typically from 0.4 to 2, alternatively from 0.8 to 1.5, alternatively from 0.9 to 1.1. Furthermore, when component (D) is (D)(ii), the concentration of component (B') is such that the ratio of the number of moles of silicon-bonded alkenyl groups in component (B') to the sum of the number of moles of silicon-bonded hydrogen atoms in component (A') and component (D)(ii) is typically from 0.4 to 2, alternatively from 0.8 to 1.5, alternatively from 0.9 to 1.1.

The mole ratio of silicon-bonded alkenyl groups or silicon-bonded hydrogen atoms in the silicone rubber (D) to silicon-bonded hydrogen atoms in the silicone resin (A') is typically from 0.01 to 0.5, alternatively from 0.05 to 0.4, alternatively from 0.1 to 0.3.

According to a fifth embodiment, the hydrosilylation-curable silicone composition comprises (A") a rubber-modified silicone resin prepared by reacting a silicone resin having the formula (R¹R²₂SiO_{1/2})_{w}(R²₂SiO_{2/2})ₓ(R¹SiO_{3/2})_{y}(SiO_{4/2})_{z} (I) and a silicone rubber having the formula R⁵R¹₂SiO(R¹R⁵SiO)_{c}SiR¹₂R⁵ (VI) in the presence of a hydrosilylation catalyst and, optionally, an organic solvent to form a soluble reaction product, wherein R¹ is C1 to C10 hydrocarbyl or C1 to C10 halogen-substituted hydrocarbyl, both free of aliphatic unsaturation, R² is R¹ or alkenyl, R⁵ is R¹ or -H, c has a value of from greater than 4 to 1,000, w is from 0 to 0.8, x is from 0 to 0.6, y is from 0 to 0.99, z is from 0 to 0.75, w+x+y+z-1, y+z/(w+x+y+z) is from 0.2 to 0.99, and w+x/(w+x+y+z) is from 0.01 to 0.8, provided the silicone resin (I) has an average of at least two silicon-bonded alkenyl groups per molecule, the silicone rubber (VI) has an average of at least two silicon-bonded hydrogen atoms per molecule, and the mole ratio of silicon-bonded hydrogen atoms in the silicone rubber (VI) to silicon-bonded alkenyl groups in silicone resin (I) is from 0.01 to 0.5; (B) an organosilicon compound having an average of at least two silicon-bonded hydrogen atoms per molecule in an amount sufficient to cure the rubber-modified silicone resin; and (C) a catalytic amount of a hydrosilylation catalyst.

Components (B) and (C) of the fifth embodiment of the silicone composition are as described and exemplified above for the first embodiment.

The concentration of component (B) is sufficient to cure (cross-link) the rubber-modified silicone resin. The concentration of component (B) is such that the ratio of the sum of the number of moles of silicon-bonded hydrogen atoms in component (B) and the silicone rubber (VI) to the number of moles of silicon-bonded alkenyl groups in the silicone resin (I) is typically from 0.4 to 2, alternatively from 0.8 to 1.5, alternatively from 0.9 to 1.1.

Component (A") is a rubber-modified silicone resin prepared by reacting at least one silicone resin having the formula (R¹R²₂SiO_{1/2})_{w}(R²₂SiO_{2/2})ₓ(R¹SiO_{3/2})_{y}(SiO_{4/2})_{z} (I) and at least one silicone rubber having the formula R⁵R¹₂SiO(R¹R⁵SiO)_{c}SiR¹₂R⁵ (VI) in the presence of a hydrosilylation catalyst and, optionally, an organic solvent to form a soluble reaction product, wherein R¹, R², R⁵, w, x, y, z, y+z/(w+x+y+z), and w+x/(w+x+y+z) are as described and exemplified above, and the subscript c has a value of from greater than 4 to 1,000.

The silicone resin having the formula (I) is as described and exemplified above for the first embodiment of the silicone composition. Also, the hydrosilylation catalyst and organic solvent are as described and exemplified above in the method of preparing the organohydrogenpolysiloxane resin having the formula (II). As used herein the term "soluble reaction product" means when organic solvent is present, the product of the reaction for preparing component (A") is miscible in the organic solvent and does not form a precipitate or suspension.

In the formula (VI) of the silicone rubber, R¹ and R⁵ are as described and exemplified above, and the subscript c typically has a value of from greater than 4 to 1,000, alternatively from 10 to 500, alternatively from 10 to 50.

Examples of silicone rubbers having the formula (VI) include, but are not limited to, silicone rubbers having the following formulae:
HMe₂SiO(Me₂SiO)₅₀SiMe₂H, HMe₂SiO(Me₂SiO)₁₀SiMe₂H, HMe₂SiO(PhMeSiO)₂₅ SiMe₂H, and Me₃SiO(MeHSiO)₁₀SiMe₃, wherein Me is methyl, Ph is phenyl, and the numerical subscripts indicate the number of each type of siloxane unit.

The silicone rubber having the formula (VI) can be a single silicone rubber or a mixture comprising two or more different silicone rubbers, each having the formula (VI).

Methods of preparing silicone rubbers containing silicon-bonded hydrogen atoms are well known in the art; many of these compounds are commercially available.

The silicone resin (I), silicone rubber (VI), hydrosilylation catalyst, and organic solvent can be combined in any order. Typically, the silicone resin, silicone rubber, and organic solvent are combined before the introduction of the hydrosilylation catalyst.

The reaction is typically carried out at a temperature of from room temperature (∼23± 2 °C) to 150 °C, alternatively from room temperature to 100 °C.

The reaction time depends on several factors, including the structures of the silicone resin and the silicone rubber, and the temperature. The components are typically allowed to react for a period of time sufficient to complete the hydrosilylation reaction. This means the components are typically allowed to react until at least 95 mol%, alternatively at least 98 mol%, alternatively at least 99 mol%, of the silicon-bonded hydrogen atoms originally present in the silicone rubber have been consumed in the hydrosilylation reaction, as determined by FTIR spectrometry. The time of reaction is typically from 0.5 to 24 h at a temperature of from room temperature (∼23 ± 2 °C) to 100 °C. The optimum reaction time can be determined by routine experimentation using the methods set forth in the Examples section below.

The mole ratio of silicon-bonded hydrogen atoms in the silicone rubber (VI) to silicon-bonded alkenyl groups in the silicone resin (I) is typically from 0.01 to 0.5, alternatively from 0.05 to 0.4, alternatively from 0.1 to 0.3.

The concentration of the hydrosilylation catalyst is sufficient to catalyze the addition reaction of the silicone resin (I) with the silicone rubber (VI). Typically, the concentration of the hydrosilylation catalyst is sufficient to provide from 0.1 to 1000 ppm of a platinum group metal, based on the combined weight of the resin and the rubber.

The concentration of the organic solvent is typically from 0 to 95% (w/w), alternatively from 10 to 75% (w/w), alternatively from 40 to 60% (w/w), based on the total weight of the reaction mixture.

The rubber-modified silicone resin can be used without isolation or purification in the fifth embodiment of the hydrosilylation-curable silicone composition or the resin can be separated from most of the solvent by conventional methods of evaporation. For example, the reaction mixture can be heated under reduced pressure. Moreover, when the hydrosilylation catalyst is a supported catalyst, described above, the rubber-modified silicone resin can be readily separated from the hydrosilylation catalyst by filtering the reaction mixture. However, when the rubber-modified silicone resin is not separated from the hydrosilylation catalyst used to prepare the resin, the catalyst may be used as component (C) of the fifth embodiment of the hydrosilylation-curable silicone composition.

According to a sixth embodiment, the hydrosilylation-curable silicone composition comprises (A"') a rubber-modified silicone resin prepared by reacting a silicone resin having the formula (R¹R⁵₂SiO_{1/2})_{w}(R⁵₂SiO_{2/2})ₓ(R⁵SiO_{3/2})_{y}(SiO_{4/2})_{z} (III) and a silicone rubber having the formula R¹R²₂SiO(R²₂SiO)_{d}SiR²₂R¹ (VII) in the presence of a hydrosilylation catalyst and, optionally, an organic solvent to form a soluble reaction product, wherein R¹ is C1 to C10 hydrocarbyl or C1 to C10 halogen-substituted hydrocarbyl, both free of aliphatic unsaturation, R² is R¹ or alkenyl, R⁵ is R¹ or -H, subscript d has a value of from greater than 4 to 1,000, w is from 0 to 0.8, x is from 0 to 0.6, y is from 0 to 0.99, z is from 0 to 0.75, w+x+y+z=1, y+z/(w+x+y+z) is from 0.2 to 0.99, and w+x/(w+x+y+z) is from 0.01 to 0.8, provided the silicone resin (III) has an average of at least two silicon-bonded hydrogen atoms per molecule, the silicone rubber (VII) has an average of at least two silicon-bonded alkenyl groups per molecule, and the mole ratio of silicon-bonded alkenyl groups in the silicone rubber (VII) to silicon-bonded hydrogen atoms in the silicone resin (III) is from 0.01 to 0.5; (B') an organosilicon compound having an average of at least two silicon-bonded alkenyl groups per molecule in an amount sufficient to cure the rubber-modified silicone resin; and (C) a catalytic amount of a hydrosilylation catalyst.

Components (B') and (C) of the sixth embodiment of the silicone composition are as described and exemplified above for the second embodiment.

The concentration of component (B') is sufficient to cure (cross-link) the rubber-modified silicone resin. The concentration of component (B') is such that the ratio of the sum of the number of moles of silicon-bonded alkenyl groups in component (B') and the silicone rubber (VII) to the number of moles of silicon-bonded hydrogen atoms in the silicone resin (III) is typically from 0.4 to 2, alternatively from 0.8 to 1.5, alternatively from 0.9 to 1.1.

Component (A"') is a rubber-modified silicone resin prepared by reacting at least one silicone resin having the formula (R¹R⁵₂SiO_{1/2})_{w}(R⁵₂SiO_{2/2})ₓR⁵SiO_{3/2})_{y}(SiO_{4/2})_{z} (III) and at least one silicone rubber having the formula R¹R²₂SiO(R²₂SiO)_{d}SiR²₂R¹ (VII) in the presence of a hydrosilylation catalyst and an organic solvent to form a soluble reaction product, wherein R¹, R², R⁵, w, x, y, z, y+z/(w+x+y+z), and w+x/(w+x+y+z) are as described and exemplified above, and the subscript d has a value of from greater than 4 to 1,000.

The silicone resin having the formula (III) is as described and exemplified above for the second embodiment of the hydrosilylation-curable silicone composition. Also, the hydrosilylation catalyst and organic solvent are as described and exemplified above in the method of preparing the organohydrogenpolysiloxane resin having the formula (II). As in the previous embodiment of the silicone composition, the term "soluble reaction product" means when organic solvent is present, the product of the reaction for preparing component (A"') is miscible in the organic solvent and does not form a precipitate or suspension.

In the formula (VII) of the silicone rubber, R¹ and R² are as described and exemplified above, and the subscript d typically has a value of from 4 to 1,000, alternatively from 10 to 500, alternatively form 10 to 50.

Examples of silicone rubbers having the formula (VII) include, but are not limited to silicone rubbers having the following formulae:
ViMe₂SiO(Me₂SiO)₅₀SiMe₂Vi, ViMe₂SiO(Me₂SiO)₁₀SiMe₂Vi, ViMe₂SiO(PhMeSiO)₂₅SiMe₂Vi, and Vi₂MeSiO(PhMeSiO)₂₅SiMe₂Vi, wherein Me is methyl, Ph is phenyl, Vi is vinyl, and the numerical subscripts indicate the number or each type of siloxane unit.

The silicone rubber having the formula (VII) can be a single silicone rubber or a mixture comprising two or more different silicone rubbers, each having the formula (VII).

Methods of preparing silicone rubbers containing silicon-bonded alkenyl groups are well known in the art; many of these compounds are commercially available.

The reaction for preparing component (A"') can be carried out in the manner described above for preparing component (A") of the fifth embodiment of the silicone composition, except the silicone resin having the formula (I) and the silicone rubber having the formula (VI) are replaced with the resin having the formula (III) and the rubber having the formula (VII), respectively. The mole ratio of silicon-bonded alkenyl groups in the silicone rubber (VII) to silicon-bonded hydrogen atoms in the silicone resin (III) is from 0.01 to 0.5, alternatively from 0.05 to 0.4, alternatively from 0.1 to 0.3. Moreover, the silicone resin and the silicone rubber are typically allowed to react for a period of time sufficient to complete the hydrosilylation reaction. This means the components are typically allowed to react until at least 95 mol%, alternatively at least 98 mol%, alternatively at least 99 mol%, of the silicon-bonded alkenyl groups originally present in the rubber have been consumed in the hydrosilylation reaction, as determined by FTIR spectrometry.

The hydrosilylation-curable silicone composition of the present method can comprise additional ingredients, provided the ingredient does not prevent the silicone composition from curing to form a cured silicone resin having low coefficient of thermal expansion, high tensile strength, and high modulus, as described below. Examples of additional ingredients include, but are not limited to, hydrosilylation catalyst inhibitors, such as 3-methyl-3-penten-1-yne, 3,5-dimethyl-3-hexen-1-yne, 3,5-dimethyl-l-hexyn-3-01, 1-ethynyl-1-cyclohexanol, 2-phenyl-3-butyn-2-ol, vinylcyclosiloxanes, and triphenylphosphine; adhesion promoters, such as the adhesion promoters taught in U.S. Patent Nos. 4,087,585 and 5,194,649; dyes; pigments; anti-oxidants; heat stabilizers; UV stabilizers; flame retardants; flow control additives; and diluents, such as organic solvents and reactive diluents.

For example, the hydrosilylation-curable silicone composition can contain (E) a reactive diluent comprising (i) an organosiloxane having an average of at least two silicon-bonded alkenyl groups per molecule and a viscosity of from 0.001 to 2 Pa_{'}s at 25 °C, wherein the viscosity of (E)(i) is not greater than 20% of the viscosity of the silicone resin, e.g., component (A), (A'), (A"), or (A"') above, of the silicone composition and the organosiloxane has the formula (R¹W²₂SiO_{1/2})ₘ(R²₂SiO_{2/2})ₙ(R¹SiO_{3/2})ₚ(SiO_{4/2})_{q}, wherein R¹ is C1 to C10 hydrocarbyl or C1 to C10 halogen-substituted hydrocarbyl, both free of aliphatic unsaturation, R² is R¹ or alkenyl, m is 0 to 0.8, n = 0 to 1, p = 0 to 0.25, q = 0 to 0.2, m+n+p+q=1 and m+n is not equal to 0, provided when p+q=0, n is not equal to 0 and the alkenyl groups are not all terminal, and (ii) an organohydrogensiloxane having an average of at least two silicon-bonded hydrogen atoms per molecule and a viscosity of from 0.001 to 2 Pa·s at 25 °C, in an amount sufficient to provide from 0.5 to 3 moles of silicon-bonded hydrogen atoms in (E)(ii) per mole of alkenyl groups in (E)(i), wherein the organohydrogensiloxane has the formula (HR¹₂SiO_{1/2})ₛ(R¹SiO_{3/2})ₜ(SiO_{4/2})ᵥ, wherein R¹ is C1 to C10 hydrocarbyl or C1 to C10 halogen-substituted hydrocarbyl, both free of aliphatic unsaturation, s is from 0.25 to 0.8, t is from 0 to 0.5, v is from 0 to 0.3, s+t+v=1, and t+v is not equal to 0.

Component (E)(i) is at least one organosiloxane having an average of at least two alkenyl groups per molecule and a viscosity of from 0.001 to 2 Pa·s at 25 °C, wherein the viscosity of (E)(i) is not greater than 20% of the viscosity of the silicone resin of the silicone composition and the organosiloxane has the formula (R¹R²₂SiO_{1/2})ₘ (R²₂SiO_{2/2})ₙ(R¹SiO_{3/2})ₚ(SiO_{4/2})_{q}, wherein R¹ is C1 to C10 hydrocarbyl or C1 to C10 halogen-substituted hydrocarbyl, both free of aliphatic unsaturation, R² is R¹ or alkenyl, m is 0 to 0.8, n = 0 to 1, p = 0 to 0.25, q = 0 to 0.2, m+n+p+q=1, and m+n is not equal to 0, provided when p+q=0, n is not equal to 0 and the alkenyl groups are not all terminal (i.e., not all the alkenyl groups in the organosiloxane are in the R¹R²₂SiO_{1/2} units). Further, organosiloxane (E)(i) can have a linear, branched, or cyclic structure. For example, when the subscipts m, p, and q in the formula of organosiloxane (E)(i) are each equal to 0, the organosiloxane is an organocyclosiloxane.

The viscosity of organosiloxane (E)(i) at 25 °C is typically from 0.001 to 2 Pa·s, alternatively from 0.001 to 0.1 Pa·s, alternatively from 0.001 to 0.05 Pa·s. Further, the viscosity of organosiloxane (E)(i) at 25 °C is typically not greater than 20%, alternatively not greater than 10%, alternatively not greater than 1%, of the viscosity of the silicone resin in the hydrosilylation-curable silicone composition.

Examples of organosiloxanes suitable for use as organosiloxane (E)(i) include, but are not limited to, organosiloxanes having the following formulae:
(ViMeSiO)₃, (ViMeSiO)₄, (ViMeSiO)₅, (ViMeSiO)₆, (ViPhSiO)₃, (ViPhSiO)₄, (ViPhSiO)₅, (ViPhSiO)₆, ViMe₂SiO(ViMeSiO)ₙSiMe₂Vi, Me₃SiO(ViMeSiO)ₙSiMe₃, and (ViMe₂SiO)₄Si, where Me is methyl, Ph is phenyl, Vi is vinyl, and the subscript n has a value such that the organosiloxane has a viscosity of from 0.001 to 2 Pa·s at 25 °C.

Component (E)(i) can be a single organosiloxane or a mixture comprising two or more different organosiloxanes, each as described above. Methods of making alkenyl-functional organosiloxanes are well known in the art.

Component (E)(ii) is at least one organohydrogensiloxane having an average of at least two silicon-bonded hydrogen atoms per molecule and a viscosity of from 0.001 to 2 Pa·s at 25 °C, in an amount sufficient to provide from 0.5 to 3 moles of silicon-bonded hydrogen atoms in (E)(ii) to moles of alkenyl groups in (E)(i), wherein the organohydrogensiloxane has the formula (HR¹₂SiO_{1/2}),(R¹SiO_{3/2})ₜ(SiO_{4/2})ᵥ, wherein R¹ is C1 to C10 hydrocarbyl or C1 to C10 halogen-substituted hydrocarbyl, both free of aliphatic unsaturation, s is from 0.25 to 0.8, t is from 0 to 0.5, v is from 0 to 0.3, s+t+v=1, and t+v is not equal to 0.

The viscosity of organohydrogensiloxane (E)(ii) at 25 °C is typically from 0.001 to 2 Pa·s, alternatively from 0.001 to 0.1 Pa·s, alternatively from 0.001 to 0.05 Pa·s .

Examples of organohydrogensiloxanes suitable for use as organohydrogensiloxane (E)(ii) include, but are not limited to, organohydrogensiloxanes having the following formulae:
PhSi(OSiMe₂H)₃, Si(OSiMe₂H)₄, MeSi(OSiMe₂H)₃, (HMe₂SiO)₃SiOSi(OSiMe₂H)₃, and (HMe₂SiO)₃SiOSi(Ph)(OSiMe₂H)₂, where Me is methyl and Ph is phenyl.

Component (E)(ii) can be a single organohydrogensiloxane or a mixture comprising two or more different organohydrogensiloxanes, each as described above. Methods of making organohydrogensiloxanes are well known in the art.

The concentration of component (E)(ii) is sufficient to provide from 0.5 to 3 moles of silicon-bonded hydrogen atoms, alternatively from 0.6 to 2 moles of silicon-bonded hydrogen atoms, alternatively from 0.9 to 1.5 moles of silicon-bonded hydrogen atoms, per mole of alkenyl groups in component (E)(i).

The concentration of the reactive diluent (E), component (E)(i) and (E)(ii) combined, in the hydrosilylation-curable silicone composition is typically from 0 to 90% (w/w), alternatively from 0 to 50% (w/w), alternatively from 0 to 20% (w/w), alternatively from 0 to 10% (w/w), based on the combined weight of the silicone resin, component (A), (A'),(A"), or (A"'), and the organosilicon compound, component (B) or (B') in the embodiments above.

The silicone composition can be a one-part composition comprising the silicone resin, organosilicon compound, and hydrosilylation catalyst in a single part or, alternatively, a multi-part composition comprising these components in two or more parts. For example, a multi-part silicone composition can comprise a first part containing a portion of the silicone resin and all of the hydrosilylation catalyst, and a second part containing the remaining portion of the silicone resin and all of the organosilicon compound.

The one-part silicone composition is typically prepared by combining the principal components and any optional ingredients in the stated proportions at ambient temperature, with or without the aid of an organic solvent. Although the order of addition of the various components is not critical if the silicone composition is to be used immediately, the hydrosilylation catalyst is preferably added last at a temperature below about 30 °C to prevent premature curing of the composition. Also, the multi-part silicone composition can be prepared by combining the components in each part.

Mixing can be accomplished by any of the techniques known in the art such as milling, blending, and stirring, either in a batch or continuous process. The particular device is determined by the viscosity of the components and the viscosity of the final silicone composition.

As an alternative to the hydrosilylation-curable silicone composition, condensation-curable silicone compositions are also suitable for the silicone composition of the present invention.

The condensation-curable silicone composition typically includes a silicone resin (A"") having silicon-bonded hydroxy or hydrolysable groups and, optionally, a cross-linking agent (B") having silicon-bonded hydrolysable groups and/or a condensation catalyst (C'). The silicone resin (A"") is typically a copolymer containing T and/or Q siloxane units in combination with M and/or D siloxane units.

According to one embodiment, the silicone resin (A"") has the formula:
(R¹R⁶ ₂SiO_{1/2})_{w},(R⁶ ₂SiO_{2/2})ₓ, (R⁶SiOP_{3/2})_{y},(SiO_{4/2})_{z}, (VIII)
wherein R¹is as defined and exemplified above, R⁶ is R¹, -H, -OH, or a hydrolysable group, and w' is from 0 to 0.8, preferably from 0.02 to 0.75, and more preferably from 0.05 to 0.3, x' is from 0 to 0.95, preferably from 0.05 to 0.8, and more preferably from 0.1 to 0.3, y' is from 0 to 1, preferably from 0.25 to 0.8, and more preferably from 0.5 to 0.8, and z' is from 0 to 0.99, preferably from 0.2 to 0.8, and more preferably from 0.4 to 0.6, and the silicone resin (A"") has an average of at least two silicon-bonded hydrogen atoms, hydroxy groups, or hydrolysable groups per molecule. As used herein the term "hydrolysable group" means the silicon-bonded group reacts with water in the absence of a catalyst at any temperature from room temperature (~23 ± 2 °C) to 100 °C within several minutes, for example thirty minutes, to form a silanol (Si-OH) group. Examples of hydrolysable groups represented by R⁶ include, but are not limited to, -Cl, -Br, -OR₇, -OCH₂CH₂OR⁷, CH₃C(=O)O-, Et(Me)C=N-O-, CH₃C(=O)N(CH₃)-, and -ONH₂, wherein R⁷ is C1 to C8 hydrocarbyl or C1 to C8 halogen-substituted hydrocarbyl.

The hydrocarbyl and halogen-substituted hydrocarbyl groups represented by R⁷ typically have from 1 to 8 carbon atoms, alternatively from 3 to 6 carbon atoms. Acyclic hydrocarbyl and halogen-substituted hydrocarbyl groups containing at least 3 carbon atoms can have a branched or unbranched structure. Examples of hydrocarbyl groups represented by R⁷ include, but are not limited to, unbranched and branched alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, and octyl; cycloalkyl, such as cyclopentyl, cyclohexyl, and methylcyclohexyl; phenyl; alkaryl, such as tolyl and xylyl; aralkyl, such as benzyl and phenethyl; alkenyl, such as vinyl, allyl, and propenyl; arylalkenyl, such as styryl; and alkynyl, such as ethynyl and propynyl. Examples of halogen-substituted hydrocarbyl groups represented by R⁷ include, but are not limited to, 3,3,3-trifluoropropyl, 3- chloropropyl, chlorophenyl, and dichlorophenyl.

Typically, at least 5 mol%, alternatively at least 15 mol%, alternatively at least 30 mol% of the groups R⁶ in the silicone resin are hydrogen, hydroxy, or a hydrolysable group. As used herein, the mol% of groups in R⁶ is defined as a ratio of the number of moles of silicon-bonded groups in the silicone resin (A"") to the total number of moles of the R⁶ groups in the silicone resin (A""), multiplied by 100.

Specific examples of silicone resins (A"") include, but are not limited to, silicone resins having the following formulae:
(MeSiO_{3/2})ₙ, (PhSiO_{3/2})ₙ, (Me₃SiO_{1/2})₀.₈(SiO_{4/2})₀.₂, (MeSiO_{3/2})₀.₆₇(PhSiO_{3/2})₀.₃₃, (MeSiO_{3/2})₀.₄₅(PhSiO_{3/2})₀.₄₀(Ph₂SiO_{2/2})₀.₁ (PhMeSiO_{2/2})₀.₀₅,
(PhSiO_{3/2})₀.₄(MeSiO_{3/2})₀.₄₅(PhSiO_{3/2})_{0.1}(PhMeSiO_{2/2})_{0.05}, and (PhSiO_{3/2})₀,₄(MeSiO_{3/2})₀.₁(PhMeSiO_{2/2})₀.₅,
wherein Me is methyl, Ph is phenyl, the numerical subscripts outside the parenthesis denote mole fractions, and the subscript n has a value such that the silicone resin has a number-average molecular weight of from 500 to 50,000. The sequence of units in the preceding formulae is not to be viewed in any way as limiting to the scope of the invention. These formulae represent the fully condensed forms of the resins. Before curing they will have -H, - OH, and/or other hydrolysable groups in the amount specified above.

As set forth above, the silicone resin (A"") represented by formula (VIII) typically has a number-average molecular weight (Mn) of from 500 to 50,000. Alternatively, the silicone resin (A"") may have a Mn of from 300 to non-measurable, alternatively 1,000 to 3,000, where the molecular weight is determined by gel permeation chromatography employing a low angle laser light scattering detector, or a refractive index detector and silicone resin (MQ) standards.

The viscosity of the silicone resin (A"") at 25 °C is typically from 0.01 Pa·s to a solid, alternatively from 0.1 to 100,000 Pa·s, alternatively from 1 to 1,000 Pa·s.

Methods of preparing silicone resins (A"") represented by formula (VIII) are well known in the art; many of these resins are commercially available. Silicone resins (A"") represented by formula (VIII) are typically prepared by cohydrolyzing the appropriate mixture of chlorosilane precursors in an organic solvent, such as toluene. For example, a silicone resin including R¹R⁶₂SiO_{1/2} units and R⁶SiO_{3/2} units can be prepared by cohydrolyzing a first compound having the formula R¹R⁶₂SiCl and a second compound having the formula R⁶SiCl₃ in toluene, where R¹ and R⁶ are as defined and exemplified above. The cohydrolyzing process is described above in terms of the hydrosilylation-curable silicone composition. The cohydrolyzed reactants can be further "bodied" to a desired extent to control the amount of crosslinkable groups and viscosity.

The Q units in formula (VIII) and their combination in any ratio with the M units can also be in the form of discrete particles in the resin (A""). The particle size is typically from 1 run to 20 µm. Examples of these particles include, but not limited to, silica (SiO_{4/2}) particles of 15 nm in diameter. The condensation curable silicone resin can further contain inorganic fillers such as silica, alumina, calcium carbonate, and mica.

In another embodiment, the condensation-curable silicone composition comprises a rubber-modified silicone resin (A"") prepared by reacting an organosilicon compound selected from (i) a silicone resin having the formula (R¹R⁶₂SiO_{1/2})_{w} (R⁶₂SiO_{2/2})ₓ(R⁶SiO_{3/2})_{y}(SiO_{4/2})_{z} and (ii) hydrolysable precursors of (i), and (iii) a silicone rubber having the formula R⁸₃SiO(R¹R⁸SiO)ₘSiR⁸₃ in the presence of water, (iv) a condensation catalyst, and (v) an organic solvent, wherein R¹ and R⁶ are as defined and exemplified above, R⁸ is R¹ or a hydrolysable group, m is from 2 to 1,000, alternatively from 4 to 500, alternatively from 8 to 400, and w, x, y, and z are as defined and exemplified above, and silicone resin (i) has an average of at least two silicon-bonded hydroxy or hydrolysable groups per molecule, the silicone rubber (iii) has an average of at least two silicon-bonded hydrolysable groups per molecule, and the mole ratio of silicon-bonded hydrolysable groups in the silicone rubber (iii) to silicon-bonded hydroxy or hydrolysable groups in the silicone resin (i) is from 0.01 to 1.5, alternatively from 0.05 to 0.8, alternatively from 0.2 to 0.5.

Typically at least 5 mol%, alternatively at least 15 mol%, alternatively at least 30 mol% of the groups R⁶ in the silicone resin (i) are hydroxy or hydrolysable groups.

The silicone resin (i) typically has a number-average molecular weight (Mn) of from 300 to non-measurable, alternatively from 500 to 10,000, alternatively 1,000 to 3,000, where the molecular weight is determined by gel permeation chromatography employing a low angle laser light scattering detector, or a refractive index detector and silicone resin (MQ) standards.

Specific examples of silicone resins suitable for use as silicone resin (i) include, but are not limited to, resins having the following formulae:
(MeSiO_{3/2})ₙ, (PhSiO_{3/2})ₙ, (PhSiO_{3/2})_{0.4}(MeSiO_{3/2})₀.₄₅(PhSiO_{3/2})_{0.1} (PhMeSiO_{2/2})_{0.05}, and (PhSiO_{3/2})₀.₃(SiO_{4/2})₀.₁(Me₂SiO_{2/2})₀.₂(Ph₂SiO_{2/2})₀.₄, where Me is methyl, Ph is phenyl, the numerical subscripts outside the parenthesis denote mole fractions, and the subscript n has a value such that the silicone resin has a number-average molecular weight of from 500 to 50,000. The sequence of units in the preceding formulae is not to be viewed in any way as limiting to the scope of the invention. Silicone resin (i) can be a single silicone resin or a mixture comprising two or more different silicone resins, each having the specified formula.

These formulae represent the fully condensed forms of the resins. Before curing they will have -H, -OH, and/or other hydrolysable groups in the amount specified above.

As used herein, the term "hydrolysable precursors" refers to silanes having hydrolysable groups that are suitable for use as starting materials (precursors) for preparation of the silicone resin (i). The hydrolysable precursors (ii) can be represented by the formulae R¹R⁸₂SiX, R⁸₂SiX₂, R⁸SiX₃, and SiX₄, wherein R¹, R⁸, and X are as defined and exemplified above.

Specific examples of hydrolysable precursors (ii) include, but are not limited to, silanes having the formulae:
Me₂ViSiCl, Me₃SiCl, MeSi(OEt)₃, PhSiCl₃, MeSiCl₃, Me₂SiCl₂, PhMeSiCl₂, SiCl₄, Ph₂SiCl₂, PhSi(OMe)₃, MeSi(OMe)₃, PhMeSi(OMe)₂, and Si(OEt)₄,
wherein Me is methyl, Et is ethyl, and Ph is phenyl.

Specific examples of silicone rubbers (iii) include, but are not limited to, silicone rubbers having the following formulae:
(EtO)₃SiO(Me₂SiO)₅₅Si(OEt)₃, (EtO)₃SiO(Me₂SiO)₁₆Si(OEt)₃, (EtO)₃SiO(Me₂SiO)₃₈₆Si(OEt)₃, and (EtO)₂MeSiO(PhMeSiO)₁₀SiMe(OEt)₂,
wherein Me is methyl and Et is ethyl.

The reaction is typically carried out at a temperature of from room temperature (~23 ± 2 °C) to 180°C, alternatively from room temperature to 100 °C.

The reaction time depends on several factors, including the structures of the silicone resin (i) and the silicone rubber (iii), and the temperature. The components are typically allowed to react for a period of time sufficient to complete the condensation reaction. This means the components are allowed to react until at least 95 mol%, alternatively at least 98 mol%, alternatively at least 99 mol%, of the silicon-bonded hydrolysable groups originally present in the silicone rubber (iii) have been consumed in the condensation reaction , as determined by ²⁹Si NMR spectrometry. The time of reaction is typically from 1 to 30 h at a temperature of from room temperature (~23 ± 2 °C) to 100 °C. The optimum reaction time can be determined by routine experimentation.

Suitable condensation catalysts (iv) are described in further detail below, and suitable organic solvents (v) are described above in the context of rubber-modified silicone resin (A') above. The concentration of the condensation catalyst (iv) is sufficient to catalyze the condensation reaction of the silicone resin (i) with the silicone rubber (iii). Typically, the concentration of the condensation catalyst (iv) is from 0.01 to 2% (w/w), alternatively from 0.01 to 1% (w/w), alternatively from 0.05 to 0.2% (w/w), based on the weight of the silicon resin (i). The concentration of the organic solvent (v) is typically from 10 to 95% (w/w), alternatively from 20 to 85% (w/w), alternatively from 50 to 80% (w/w), based on the total weight of the reaction mixture.

The concentration of water in the reaction mixture depends on the nature of the groups R8 in the organosilicon compound and the nature of the silicon-bonded hydrolysable groups in the silicone rubber. When the silicone resin (i) contains hydrolysable groups, the concentration of water is sufficient to effect hydrolysis of the hydrolysable groups in the silicon resin (i) and the silicone rubber (iii). For example, the concentration of water is typically from 0.01 to 3 moles, alternatively from 0.05 to 1 moles, per mole of hydrolysable group in the silicone resin (i) and the silicone rubber (iii) combined. When the silicone resin (i) does not contain hydrolysable groups, only a trace amount, e.g., 100 ppm, of water is required in the reaction mixture. Trace amounts of water are normally present in the reactants and/or solvent.

As set forth above, the condensation-curable silicone composition can further comprise the cross-linking agent (B"). The cross-linking agent (B") can have the formula R⁷qSiX₄-q, wherein R⁷ is C1 to C8 hydrocarbyl or C1 to C8 halogen-substituted hydrocarbyl, X is a hydrolysable group, and q is 0 or 1. The hydrocarbyl and halogen-substituted hydrocarbyl groups represented by R⁷, and the hydrolysable groups represented by X are as described and exemplified above.

Specific examples of cross-linking agents (B") include, but are not limited to, alkoxy silanes such as MeSi(OCH₃)₃, CH₃Si(OCH₂CH₃)₃, CH₃Si(OCH₂CH₂CH₃)₃, CH₃Si[O(CH₂)₃CH₃]₃, CH₃CH₂Si(OCH₂CH₃)₃, C₆H₅Si(OCH₃)₃, C₆H₅CH₂Si(OCH₃)₃ C₆H₅Si(OCH₂CH₃)₃, CH₂=CHSi(OCH₃)₃, CH₂=CHCH₂Si(OCH₃)₃, CF₃CH₂CH₂Si(OCH₃)₃, CH₃Si(OCH₂CH₂OCH₃)₃, CF₃CH₂CH₂Si(OCH₂CH₂OCH₃)₃, CH₂=CHSi(OCH₂CH₂OCH₃)₃, CH₂=CHCH₂Si(OCH₂CH₂OCH₃)₃, C₆H₅Si(OCH₂CH₂OCH₃)₃, Si(OCH₃)₄, Si(OC₂H₅)₄, and Si(OC₃H₇)₄; organoacetoxysilanes such as CH₃Si(OCOCH₃)₃, CH₃CH₂Si(OCOCH₃)₃, and CH₂=CHSi(OCOCH₃)₃; organoiminooxysilanes such as CH₃Si[O-N=C(CH₃)CH₂CH₃]₃, Si[O-N=C(CH₃)CH₂CH₃]₄, and CH₂=CHSi[O-N=C(CH₃)CH₂CH₃]₃; organoacetamidosilanes such as CH₃Si[NHC(=O)CH_{3]3} and C₆H₅Si[NHC(=O)CH₃]₃; amino silanes such as CH₃Si[NH(s-C₄H₉)]₃ and CH₃Si(NHC₆H₁₁)₃; and organoaminooxysilanes.

The cross-linking agent (B") can be a single silane or a mixture of two or more different silanes, each as described above. Also, methods of preparing tri- and tetrafunctional silanes are well known in the art; many of these silanes are commercially available.

When present, the concentration of the cross-linking agent (B") in the condensation-curable silicone composition is sufficient to cure (cross-link) the condensation-curable silicone resin. The exact amount of the cross-linking agent (B") depends on the desired extent of cure, which generally increases as the ratio of the number of moles of silicon-bonded hydrolysable groups in the cross-linking agent (B") to the number of moles of silicon-bonded hydrogen atoms, hydroxy groups, or hydrolysable groups in the silicone resin (A"") increases. Typically, the concentration of the cross-linking agent (B") is sufficient to provide from 0.2 to 4 moles of silicon-bonded hydrolysable groups per mole of silicon-bonded hydrogen atoms, hydroxy groups, or hydrolysable groups in the silicone resin (A""). The optimum amount of the cross-linking agent (B') can be readily determined by routine experimentation.

Condensation catalyst (C') can be any condensation catalyst typically used to promote condensation of silicon-bonded hydroxy (silanol) groups to form Si-O-Si linkages. Examples of condensation catalysts include, but are not limited to, amines; and complexes of lead, tin, zinc, and iron with carboxylic acids. In particular, the condensation catalyst (C') can be selected from tin(II) and tin(IV) compounds such as tin dilaurate, tin dioctoate, and tetrabutyl tin; and titanium compounds such as titanium tetrabutoxide.

When present, the concentration of the condensation catalyst (C') is typically from 0.1 to 10% (w/w), alternatively from 0.5 to 5% (w/w), alternatively from 1 to 3% (w/w), based on the total weight of the silicone resin (A"").

When the condensation-curable silicone composition includes the condensation catalyst (C'), the condensation-curable silicone composition is typically a two-part composition where the silicone resin (A"") and condensation catalyst (C') are in separate parts.

The condensation-curable silicone composition of the present invention can comprise additional ingredients, as known in the art and as described above for the hydrosilylation-curable silicone composition.

In the illustrated embodiment, the silicone resin layer 105 may be treated or modified to increase adhesion between the silicone resin layer 105 and layers that may be subsequently formed or placed adjacent the silicone resin layer 105, as indicated by the arrows 115 in Figure 1B. For example, one surface of the silicone resin layer 105 may be exposed to an oxygen plasma or ultraviolet ozone to increase interfacial interactions between the silicone resin layer 105 and layers that are subsequently formed or deployed adjacent to the surface. For another example, the stoichiometry near a surface of the silicone resin layer 105 may be modified using hydrosilylation to create residual SiH groups or other residual functionality that may improve adhesion of the silicone resin layer 105 and layers that are subsequently formed or deployed adjacent the surface. In one embodiment, the adhesion between layers may be engineered to be strong enough to hold to layers together but weak enough to retain benefit of the relieved elastic constraint provided by forming the silicone resin layer 105 with a thickness less than the ductile transition thickness. However, persons of ordinary skill in the art having benefit of the present disclosure should appreciate that treating the silicone resin layer 105 is an optional step that may not be performed in all embodiments of the present invention. Furthermore, other treatments or modifications may be used to increase adhesion between the silicone resin layer 105 and other layers, or for other purposes.

A second silicone resin layer 120 may then be formed or deployed adjacent the silicone resin layer 105, as shown in Figure 1C. In one embodiment, the silicone resin layer 120 is formed by depositing a curable silicone resin composition over the silicone resin layer 105. For example, a film of curable silicone resin composition may be deposited using conventional coating techniques, such as deposition by an ink jet, spin coating, dipping, spraying, brushing, screen-printing, and the like. The curable silicone resin composition is then cured (or partially cured) to form the silicone resin layer 120. As discussed above, the curing process may include adding one or more catalysts as well as exposing the curable silicone resin composition to elevated temperatures. However, persons of ordinary skill in the art having benefit of the present disclosure should appreciate that the present invention is not limited to depositing and/or curing the silicone resin composition over the silicone resin layer 105. In alternative embodiments, the silicone resin layer 120 may be formed separately and then deployed adjacent the silicone resin layer 105.

The (cured or partially cured) silicone resin layer 120 is formed to have a thickness (T) that is less than a ductile transition thickness (T_{d}) of the cured or partially cured silicone resin that is used to form the silicone resin layer 120. In one embodiment, the silicone resin layers 105, 120 are formed using the same curable silicone resin composition and therefore may have the same ductile transition thickness. However, the actual thicknesses of the silicone resin layers 105, 120 may not be the same. Furthermore, in alternative embodiments, the silicone resin layers 105, 120 may be formed using different curable silicone resin compositions (or different curing processes) and so they may have different ductile transition thicknesses. The silicone resin layer 120 can also be a layer of composition other than a silicone resin. For example, it can be a curable silicone rubber. Alternatively, it can be an organic polymer, deposited either by solvent casting, or any other coating techniques, or by laminating a preformed film. The organic polymer film can be either thermoplastic or thermosett in nature. Examples of them include epoxy resins, polyurethane, polyester, polyimide, cyanate ester resins, polyacrylates, polyethylene, polypropylene, polystyrene, polyetherethersulfone, etc. The silicone resin film 125 formed of the silicone resin layers 105, 120 may then be removed from the substrate 110, e.g., by peeling up the silicone resin film 125, as shown in Figure 1D.

The flexibility and/or durability of the silicone resin film 125 may be improved by forming the silicone resin film 125 of multiple silicone resin layers 105, 120 that have thicknesses less than their corresponding ductile transition thicknesses. For example, a nine layer film 125 constructed by laying five layers of a rubber toughened version of the aforementioned Resin-1 by spin coating a 50 wt.% of it in MIBK onto stainless steel, and four layers of a hydrosilylation cured silicone rubber. The resin and rubber layers are arranged in an alternating fashion. The toughened Resin-1 can be prepared by reacting 10 wt.% of triethoxysiloxy terminated PDMS of degree of polymerization of 55 with the uncured Resin-1 with 0.2 wt.% Ti(OBu)₄ as the catalyst. Each layer is cured at 200 °C for 1 hour after it is laid down and before the next layer is deposited. The rubber layer is treated with O₂ plasma before the deposition of the next layer, the toughened Resin-1. After curing the nine layers, the multilayer film is peeled off from the stainless steel. The total thickness of the film is 66 micrometers. The tensile strain at break of the multilayer film is 9.4±3.9%, the tensile modulus is 716.6±85.4 MPa. In contrast, a cured single layer film of the same toughened 4-3136 has a strain at break of only 2.0%.

Although the embodiment of the multilayer silicone resin film 125 illustrated in Figures 1A, 1B, 1C, and 1D includes two silicone resin layers 105, 120, the present invention is not limited to multilayer silicone resin films 125 that only include two silicone resin layers 105, 120. In one embodiment, the multilayer silicone resin film 125 may be formed of numerous silicone resin layers that have thicknesses less than their corresponding ductile transition thicknesses. For example, a multilayer silicone resin film 125 having a thickness of about 40-50 µm may be formed using several silicone resin layers 105, 120 that each have thicknesses less than their corresponding ductile thicknesses of approximately 2-10 µm. In fact, multilayer silicone resin films 125 having thicknesses of 100 µm or larger may be formed by adding additional silicone resin layers 105, 120 until a target thickness has been reached. Furthermore, other layers that are not the silicone resin layers 105, 120 may also be included in the layer stack used to form the multilayer silicone resin film 125.

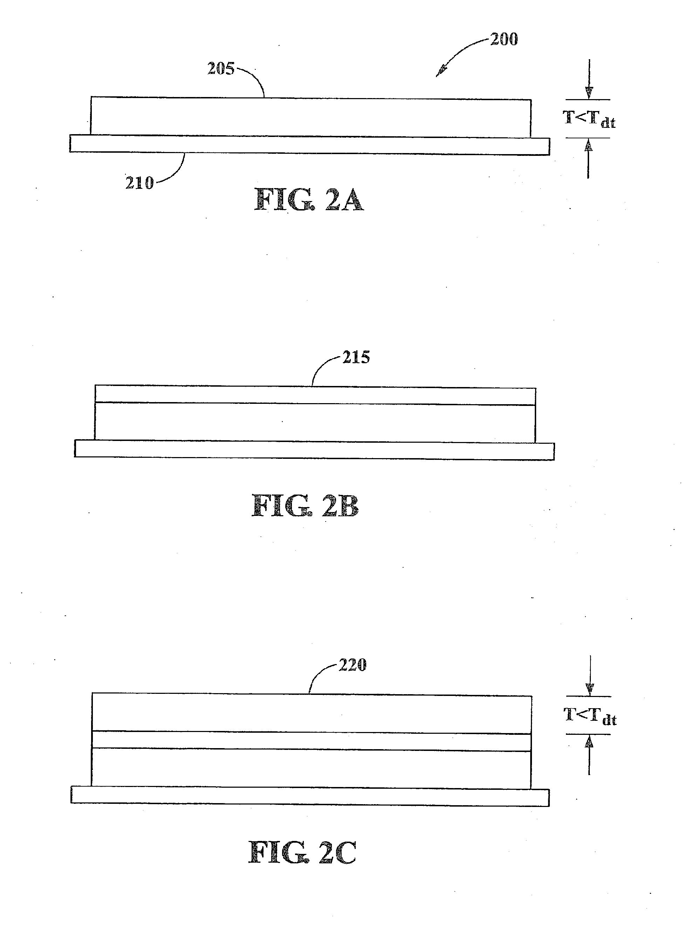

Figures 2A, 2B, and 2C conceptually illustrate a second exemplary embodiment of a method 200 of forming a multilayer silicone resin film. In the illustrated embodiment, a silicone resin layer 205 is formed above a substrate 210, as shown in Figure 2A. The silicone resin layer 205 may be formed using a variety of techniques.In one embodiment, the silicone resin layer 205 is formed by depositing a curable silicone resin composition over the substrate 205. For example, the film of curable silicone resin composition may be deposited using conventional coating techniques, such as deposition by an ink jet, spin coating, dipping, spraying, brushing, screen-printing, and the like. The curable silicone resin composition is then cured (or partially cured) to form the silicone resin layer 205. In various alternative embodiments, the curing process may include adding one or more catalysts as well as exposing the curable silicone resin composition to elevated temperatures.

The (cured or partially cured) silicone resin layer 205 is formed to have a thickness (T) that is less than a ductile transition thickness (T_{d}) of the cured or partially cured silicone resin that is used to form the silicone resin layer 205. In one embodiment, the silicone resin layer 205 may be treated or modified to improve adhesion between the silicone resin layer 205 and any layers that are subsequently formed or deployed adjacent the silicone resin layer 205. However, as discussed above, whether or not to treat or modify the silicone resin layer 205, as well as the techniques that may be used to treat or modify the silicone resin layer 205 if such treatment or modification is performed, is a matter of design choice and not material to the present invention.

One or more additional layers 215 may be formed or deployed adjacent the silicone resin layer 205, as shown in Figure 2B. For example, the additional layers 215 may be formed by depositing and curing a curable composition over the silicone resin layer 205. Alternatively, the additional layer or layers 215 may be formed elsewhere and then positioned adjacent the silicone resin layer 205. In various alternative embodiment, the additional layer or layers 215 may be formed of or include a variety of different materials. For example, the additional layer 215 may be formed of materials including rubber particles, co-polymerized rubber segments, silicone rubber, organic polymers, and the like. The number of layers 215 is a matter of design choice and not material to the present invention. Furthermore, the layers 215 may be formed at any location in the layer stack including locations beneath the silicone resin layer 205, intermediate the silicone resin layer 205 and subsequently formed silicone resin layers, or above all of the silicone resin layers in the layer stack.

A second silicone resin layer 220 may then be formed or deployed adjacent the silicone resin layer 105, as shown in Figure 2C. In one embodiment, the silicone resin layer 220 is formed by depositing a curable silicone resin composition over the silicone resin layer 205. For example, a film of curable silicone resin composition may be deposited using conventional coating techniques, such as deposition by an ink jet, spin coating, dipping, spraying, brushing, screen-printing, and the like. The curable silicone resin composition is then cured (or partially cured) to form the silicone resin layer 220. As discussed above, the curing process may include adding one or more catalysts as well as exposing the curable silicone resin composition to elevated temperatures. However, persons of ordinary skill in the art having benefit of the present disclosure should appreciate that the present invention is not limited to depositing and/or curing the silicone resin composition over the silicone resin layer 205. In alternative embodiments, the silicone resin layer 220 may be formed separately and then deployed adjacent the silicone resin layer 205.

The (cured or partially cured) silicone resin layer 220 has a thickness (T) that is less than a ductile transition thickness (T_{d}) of the cured or partially cured silicone resin that is used to form the silicone resin layer 220. In one embodiment, the silicone resin layers 205, 220 are formed using the same curable silicone resin composition and therefore may have the same ductile transition thickness. However, the actual thicknesses of the silicone resin layers 205, 220 may differ. Furthermore, in alternative embodiments, the silicone resin layers 205, 220 may be formed using different curable silicone resin compositions (or different curing processes) and so they may have different ductile transition thicknesses.

Although the embodiment of the multilayer silicone resin film illustrated in Figures 2A, 2B, and 2C includes two silicone resin layers 205, 220 separated by an additional layer 215, the present invention is not limited to multilayer silicone resin films that only include 205, 220 separated by an additional layer 215. In one embodiment, the multilayer silicone resin film may be formed of numerous silicone resin layers that have thicknesses less than their corresponding ductile transition thicknesses and arranged in any order. The silicone resin layers may also be separated by one or more additional layers. However, persons of ordinary skill in the art having benefit of the present disclosure should appreciate that the particular sequence of silicone resin layers 205, 220 and, if present, additional layers 215, is a matter of design choice and not material to the present invention.

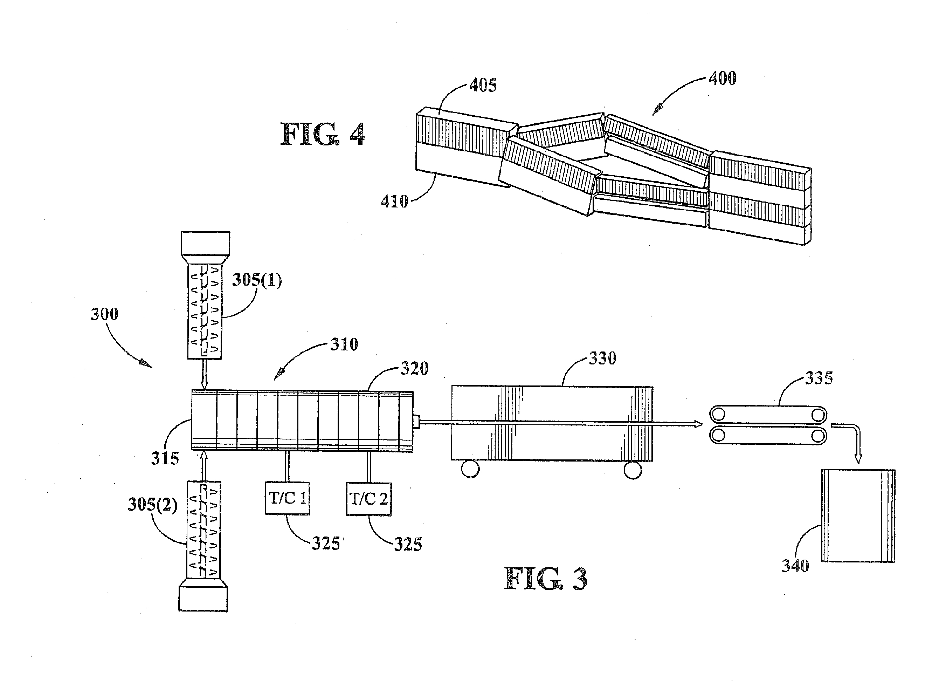

Figure 3 conceptually illustrates a first exemplary embodiment of a system 300 that is used to form a multilayer silicone resin film. In the illustrated embodiment, a pair of single screw extruders 305(1-2) are used to extrude two molten silicon-containing polymers into a multilayer (or microlayer) die assembly 310 via an adapter 315 in the multilayer die assembly 310. Exemplary silicone-containing materials that may be extruded by the single screw extruders 305(1-2) have been described in detail herein and in the interest of clarity these descriptions will not be repeated here. The two silicon-containing polymer flows pass through multiple stages (or die assemblies) 320 (only one indicated by a numeral in Figure 3) of the multilayer die assembly 310. Thermocouples 325 may be used to maintain a temperature of the multilayer die assembly 310. Each of the die assemblies 320 functions to divide the concurrent silicon-containing polymer flows and then recombine them into a stack such that the stack includes alternating layers of the two silicon-containing polymers. Thus, when the polymer flow entering the die assembly 320 is formed into a stack of n alternating layers of the two silicon-containing polymers, the polymer flow leaving the die assembly 320 comprises a stack of *2n* alternating layers of the two silicon-containing polymers.

Figure 4 conceptually illustrates a polymer flow 400 undergoing the divide-and-stack process implemented by a die assembly. In the illustrated embodiment, the polymer flow 400 initially includes a stack that has a first polymer 405 above a second polymer 410. As the polymer flow 400 passes through the die assembly, the stack is divided along a horizontal plane and one portion of the stack is directed downward while another portion of the stack is directed upward. The upward portion of the stack and the downward portion of a stack are both compressed to approximately half of their original thicknesses and then the two portions of the polymer flow 400 are stacked on top of each other to form an output polymer flow 400 that includes four alternating layers of the first polymer 405 and the second polymer 410.

Referring back to Figure 3, the multilayer die assembly 310 shown in the illustrated embodiment includes 10 die assemblies 320 so that the output polymer flow from the multilayer die assembly 310 includes 2¹⁰=1024 alternating layers of the silicon containing polymers. However, persons of ordinary skill in the art having benefit of the present disclosure should appreciate that the present invention is not limited to a multilayer die assembly 310 that includes 10 die assemblies 320. In alternative embodiments, any number of die assemblies 320 may be incorporated into the multilayer die assembly 310 to form output polymer flows having a selected number of alternating layers of the two silicon-containing polymers. In the illustrated embodiment, the flow path within the die assembly 320 is 0.356 (0.904 cm) inches square, so that the output polymer flow includes 1024 layers that each has a thickness of approximately 10 µ. The output polymer flow is provided to a cooling bath 330 after the polymer flow leaves the multilayer die assembly 310 and the cooled multilayer polymer is provided to a strand puller 335 to elongate the cooled multilayer polymer. The resulting multilayer film may then be stored in an output 340.

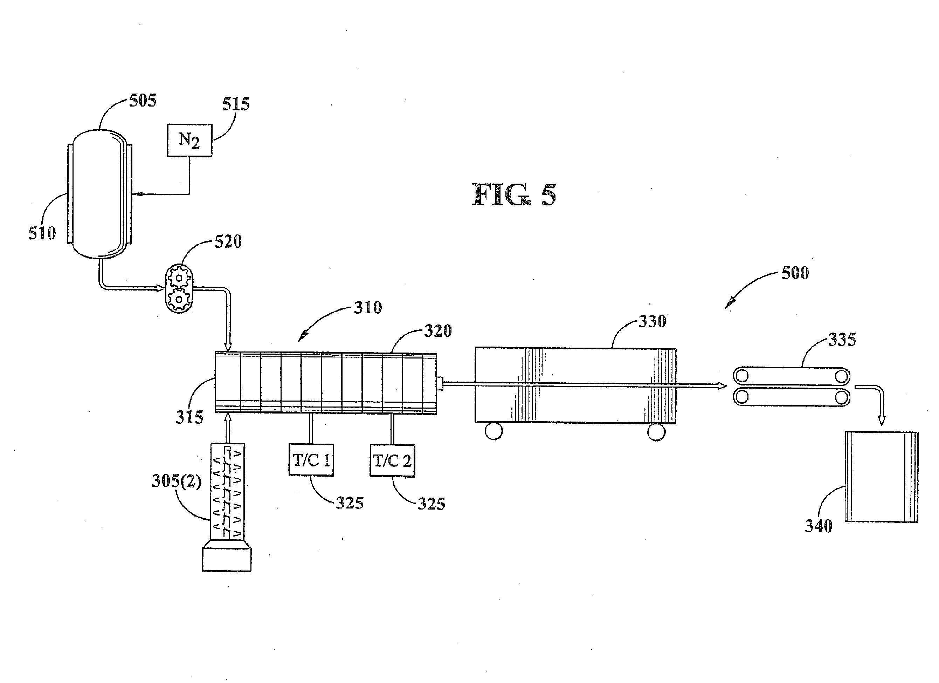

Figure 5 conceptually illustrates a second exemplary embodiment of a system 500 that is used to form a multilayer silicone resin film. The second exemplary embodiment of the system 500 is similar to the first exemplary embodiment of the system 300 except that the first single screw extruder 305(1) is replaced by a silicone gum pot 505. In the illustrated embodiment, the silicone gum pot may be cooled by providing nitrogen to a jacket 510 from a nitrogen source 515. A gear pump 520 is then used to meter the silicone gum into the adapter 315 in the multilayer die assembly 310 and the single screw extruder 305(2) is used to extrude a molten silicon-containing polymer into the multilayer die assembly 310. As discussed before, the silicone gum and the extruded silicon polymer pass through the multilayer die assembly 310 including the 10 die assemblies 320 to form a multilayer polymer having 2¹⁰=1024 alternating layers of the silicone gum and the silicon containing polymer. The output polymer flow is provided to a cooling bath 330 after the polymer flow leaves the multilayer die assembly 310 and the cooled multilayer polymer is provided to a strand puller 335 to elongate the cooled multilayer polymer. The resulting multilayer film may then be stored in an output 340. Although silicon-containing polymers are mentioned here for illustrative purposes, other polymers can also be processed into multilayered materials using this set up.

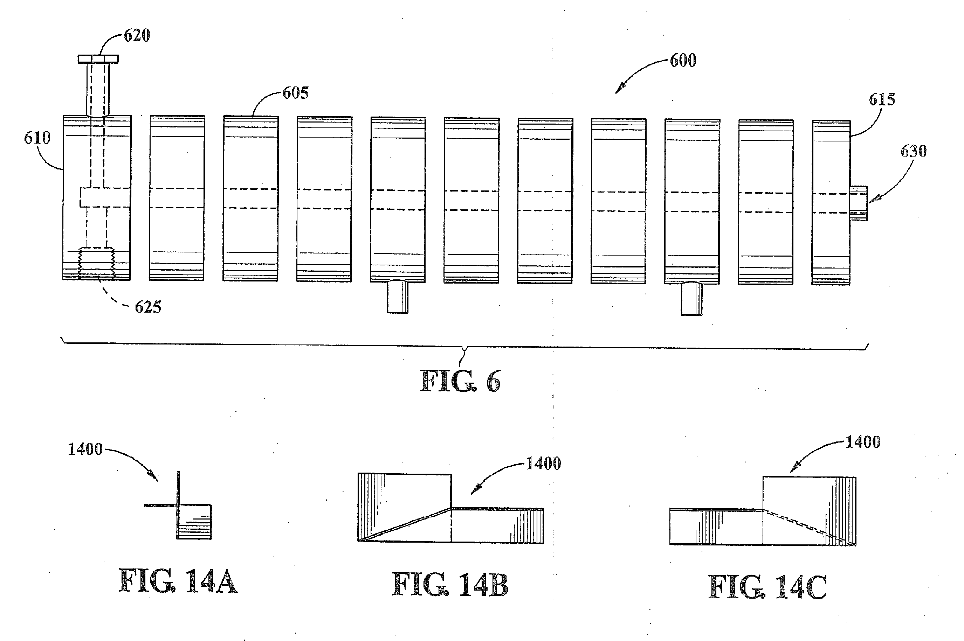

Figure 6 conceptually illustrates one exemplary embodiment of a multilayer die assembly 600. In the illustrated embodiment, the multilayer die assembly 600 includes a plurality of housings 605 (only one indicated by a numeral in Figure 6). The multilayer die assembly 600 also includes an adapter 610 and an endpiece housing 615. The adapter 610 includes ports 620, 625 for receiving the two silicon-containing polymers and/or the silicone gum. The silicon containing polymer flow travels through the multilayer die assembly 600 along a path indicated by the dashed lines before exiting the multilayer die assembly 600 at the exit port 630. In the illustrated embodiment, the housings 605 and the endpiece housing 615 each include a die insert (not shown in Figure 6) that performs the divide-and-stack process described herein.

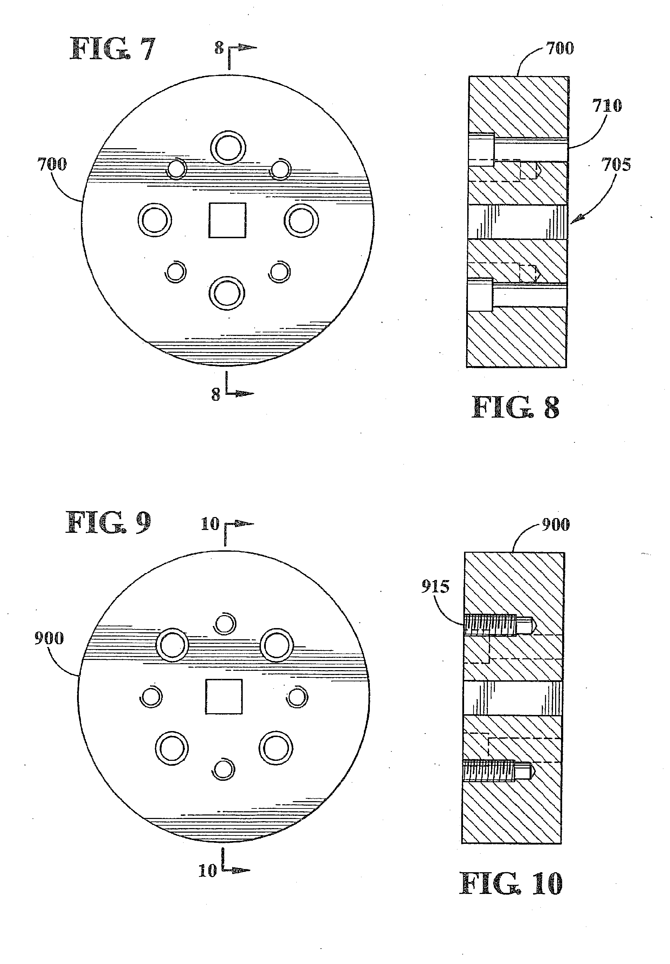

Figures 7 and 8 depict face-on and cross-sectional views, respectively, of one embodiment of a housing 700. In the illustrated embodiment, the housing 700 includes a channel 705 that is configured to accept a die insert. The channel 705 may be a 0.356 (0.904 cm) inches square. The housing 700 also includes a plurality of bolt holes 710 (only one indicated by a numeral in Figures 7 and 8) that are configured to receive bolts that are used to couple the housing 700 to another housing and/or an adapter. The housing 700 may be constructed of stainless steel.

Figures 9 and 10 depict face-on and cross-sectional views, respectively, of the housing 700 shown in Figures 7 and 8 at a different orientation. In the illustrated embodiment, the housing 700 also includes a plurality of bolt holes 715 (only one indicated by a numeral in Figures 9 and 10) that are threaded to receive and anchor bolts that are used to couple the housing 700 to another housing and/or an adapter.

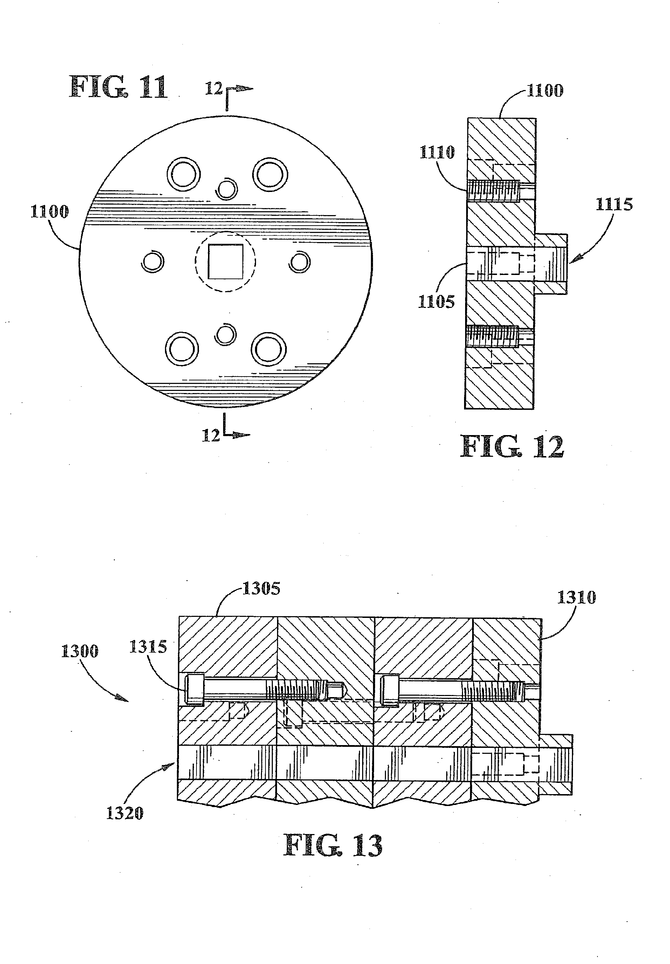

Figures 11 and 12 depict face-on and cross-sectional views, respectively, of one embodiment of an endpiece housing 1100. In the illustrated embodiment, the endpiece housing 1100 includes a channel 1105 that is configured to accept a die insert. The channel 1105 may be a 0.356 (0.904 cm) inches square. The housing 1100 also includes a plurality of bolt holes 1110 (only one indicated by a numeral in Figures 11 and 12) that are configured to receive bolts that are used to couple the endpiece housing 1100 to another housing and/or an adapter. The endpiece housing 1100 also includes an exit port 1115. The endpiece housing 1100 may be constructed of stainless steel.

Figure 13 depicts a portion of a multilayer die assembly 1300 that includes a plurality of die assemblies 1305 and an endpiece die assembly 1310. The plurality of die assemblies 1305 and the endpiece die assembly 1310 are fastened together using one or more bolts 1315. When assembled, the channels of the die assemblies 1305, 1310 are aligned to form a single channel 1320 through the multilayer die assembly 1300.

Figures 14A, 14B, and 14C depict one exemplary embodiment of a portion of a die insert 1400. Figure 14A depicts the portion of the die insert 1400 from a perspective looking along the axis that corresponds to the axis of the channel through the multilayer die assembly when the die insert 1400 is installed in a die assembly. Figure 14B depicts the portion of the die insert 1400 from a perspective looking from one side perpendicular to the axis that corresponds to the axis of the channel through the multilayer die assembly when the die insert 1400 is installed in a die assembly. Figure 14C depicts the portion of the die insert 1400 from a perspective looking from a side opposite to the side used in Figure 14B and perpendicular to the axis that corresponds to the axis of the channel through the multilayer die assembly when the die insert 1400 is installed in a die assembly. Each die insert includes two of the portions 1400.

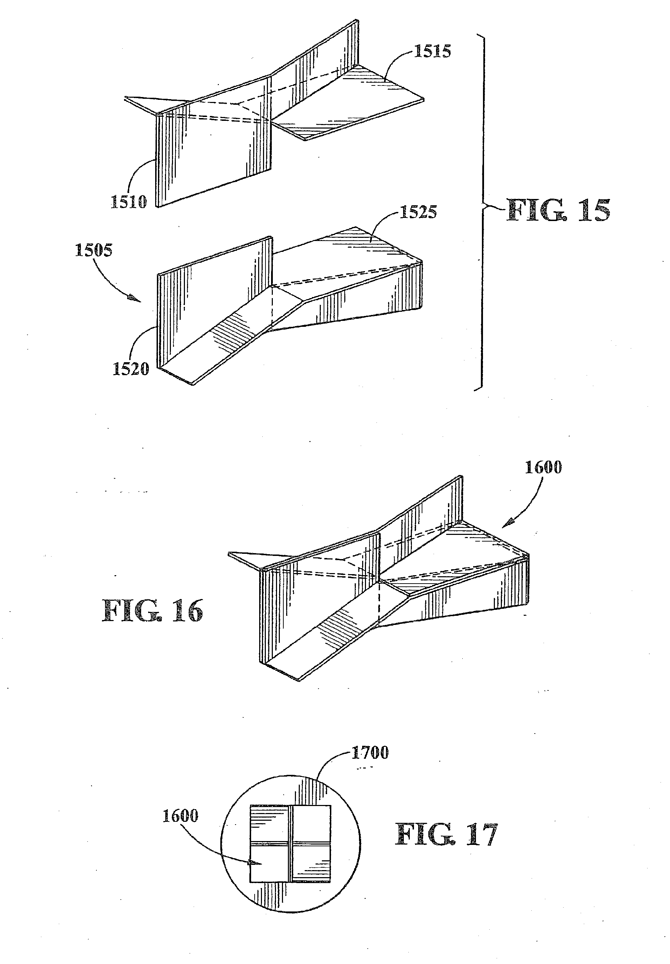

Figure 15 depicts two portions 1500, 1505 that are used to form a single die insert. In the illustrated embodiment, each of the portions 1500, 1505 include first and second L-shaped sheets 1510, 1515, 1520, 1525. Each L-shaped sheet 1510, 1515 are shaped to have two legs intersecting at approximately right angles to form an inner corner of the L-shaped sheet 1510, 1515, 1520, 1525 and an outer corner of the L-shaped sheet 1510, 1515, 1520, 1525. Pairs of the L-shaped sheets 1510, 1515, 1520, 1525 are then deployed perpendicular to each other so that they meet at their respective inner corners. One leg of each L-shaped sheet 1510, 1515, 1520, 1525 is bent or angled so that a top edge of the leg is adjacent the outer corner of the other L-shaped sheet.

A die insert may then be formed from the two portions 1500, 1505 by joining the first and second die insert components 1500, 1505 so that one (unbent) leg of the L-shaped sheet 1515 in the first die insert component 1500 is parallel to and adjacent one (unbent) leg of the L-shaped sheet 1525 in the second die insert component 1505. One (unbent) leg of the L-shaped sheet 1510 in the first die insert component 1500 is also parallel to and adjacent one (unbent) leg of the L-shaped sheet 1520 in the second die insert component 1505. Figure 16 depicts one exemplary embodiment of a completed die insert 1600. Figure 17 depicts the exemplary embodiment of the completed die insert 1600 when it is inserted into a portion of a housing 1700.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

The following numbered paragraphs define particular embodiments of the present invention.
1. A method, comprising:
   forming a silicone resin film comprising at least two polymer layers, at least one of them being a silicone resin layer, the thickness of said at least one silicone resin layer being less than a corresponding ductile transition thickness.
2. The method of paragraph 1, wherein forming the silicone resin film comprises forming a first silicone resin layer having a thickness less than a corresponding ductile transition thickness.
3. The method of paragraph 2, wherein forming the silicone resin film comprises forming at least a second silicone resin layer having a thickness less than a corresponding ductile transition thickness.
4. The method of paragraph 3, wherein the silicone resin film comprises forming the silicone resin film such that said at least two silicone resin layers are adjacent.
5. The method of paragraph 4, wherein forming the silicone resin film comprises treating at least one surface of the first silicone resin layer to increase adhesion to the second silicone resin layer.
6. The method of paragraph 5, wherein treating said at least one surface of the first silicone resin layer comprises at least one of exposing said at least one surface to an oxygen plasma, exposing said at least one surface to ultraviolet ozone, and modifying a stoichiometry of said at least one surface.
7. The method of paragraph 3, wherein forming the silicone resin film comprises forming at least one third layer adjacent at least one of said two silicone resin layers.
8. The method of paragraph 7, when forming said at least one third layer comprises forming said at least one third layer such that at least one third layer comprises at least one of a rubber particle, a co-polymerized rubber segment, and a silicone rubber.
9. The method of paragraph 1, wherein at least one layer of the said at least two polymer layers is a silicone rubber.
10. The method of paragraph 1, wherein at least one layer of the said at least two polymer layers is an organic polymer.
11. A silicone resin film formed by:
   layering at least two polymer layers, at least one of then being a silicone resin layer, the thickness of said at least one silicone resin layer being less than a corresponding ductile transition thickness.
12. The silicone resin film of paragraph 11, wherein the silicone resin film is formed by forming a first silicone resin layer having a thickness less than a corresponding ductile transition thickness.
13. The silicone resin film of paragraph 12, wherein the silicone resin film is formed by forming at least a second silicone resin layer having a thickness less than a corresponding ductile transition thickness.
14. The silicone resin film of paragraph 11, wherein the silicone resin film is formed by layering said at least two silicone resin layers adjacent each other.
15. The silicone resin film of paragraph 14, wherein the silicone resin film is formed by treating at least one surface of the first silicone resin layer to increase adhesion to the second silicone resin layer.
16. The silicone resin film of paragraph 15, wherein the silicone resin film is formed by at least one of exposing said at least one surface to an oxygen plasma, exposing said at least one surface to ultraviolet ozone, and modifying a stoichiometry of said at least one surface.
17. The silicone resin film of paragraph 11, wherein the silicone resin film is formed by forming at least one third layer adjacent at least one of said at least two polymer layers.
18. The silicone resin film of paragraph 17, wherein the silicone resin film is formed by forming said at least one third layer such that at least one third layer comprises at least one of a rubber particle, a co-polymerized rubber cement, and a silicone rubber.
19. The silicone resin film of paragraph 11, wherein at least one layer of the said at least two polymers layers is a silicone rubber.
20. The silicone resin films of paragraph 11, wherein at least one layer of the said at least two polymer layers is an organic polymer.
21. A silicone resin film, comprising:
   at least two polymer layers, at least one of them being a silicone resin layer, the thickness of said at least one silicone resin layer being less than a corresponding ductile transition thickness.
22. The silicone resin film of paragraph 21, comprising a first silicone resin layer having a thickness less than a corresponding ductile transition thickness.
23. The silicone resin film of paragraph 22, comprising at least a second silicone resin layer having a thickness less than a corresponding ductile transition thickness.
24. The silicone resin film of paragraph 32, where said at least two silicone resin layers are adjacent each other.
25. The silicone resin film of paragraph 24, wherein at least one surface of the first silicone resin layer has been treated to increase adhesion to the second silicone resin layer.
26. The silicone resin film of paragraph 25, wherein said at least one surface of the first silicone resin layer has been treated by at least one of exposing said at least one surface to an oxygen plasma, exposing said at least one surface to ultraviolet ozone, and modifying a stoichometry of said at last one surface.
27. The silicone resin film of paragraph 21, comprising at least one third layer adjacent at least one of said at last two silicone resin layers.
28. The silicone resin film of paragraph 27, wherein said at least one third layer comprises at least one of a rubber particle, a co-polymerized rubber cement, and a silicone rubber.
29. The silicone resin film of paragraph 21, wherein at least one layer of the said at least two polymer layers is a silicone rubber.
30. The silicone resin film of paragraph 21, wherein at least one layer of the said at least two polymer layers is an organic polymer.
31. A die insert component, comprising:
   first and second L-shaped sheets, each L-shaped sheet having two legs intersecting at approximately right angles to form an inner corner of the L-shaped sheet and an outer corner of the L-shaped sheet, the two L-shaped sheets being deployed perpendicular to each other and meeting at their respective inner corners, one leg of each L-shaped sheet being bent so that a top edge of the leg is adjacent the outer corner of the other L-shaped sheet.
32. A de insert, comprising:
   first and second die insert components, each die insert component formed of first and second L-shaped sheets, each L-shaped sheet having first and second legs intersecting at approximately right angles to form an inner corner of the L-shaped sheet and an outer corner of the L-shaped sheet, the first and second L-shaped sheets being deployed perpendicular to each other and meeting at their respective inner corners, the first leg of each L-shaped sheet being bent so that a top edge of the leg is adjacent the other corner of the other L-shaped sheet,
   the first and second die insert components being joined such that the second leg of the first L-shaped sheet in the first die insert component is parallel to and adjacent the second leg of the first L-shaped sheet in the second die insert component.
33. A microlayer die assembly, comprising:
   a plurality of die inserts deployed adjacent each other, each die insert comprising:
      first and second die insert components, each die insert component formed of first and second L-shaped sheets, each L-shaped sheet having first and
      second legs intersecting at approximately right angles to form an inner corner of the L-shaped sheet and an outer corner of the L-shaped sheet, the first and second L-shaped sheets being deployed perpendicular to each other and meeting at their respective inner corners, the first leg of each L-shaped sheet being bent so that a top edge of the leg is adjacent the outer corner of
      the other L-shaped sheet,
   the first and second leg die insert components being joined such that the second
      leg of the first L-shaped sheet in the first die insert component is parallel to and adjacent the second leg of the first L-shaped sheet in the second die insert component, and
   each of the plurality of die inserts being aligned along an axis that is in a first
      plane defined by the adjacent second legs of the first L-shaped sheets in the first and second die insert components, the axis also being in a second plane defined by adjacent second legs of the second L-shaped sheets in the first and second die insert components, the second plane being perpendicular to the first plane.
34. The microlayer die assembly of paragraph 33, comprising a plurality of housings, each housing encompassing one of the plurality of die inserts, the housings being deployed adjacent each other such that the plurality of die inserts are aligned along the axis.
35. The microlayer die assembly of paragraph 33, comprising an adapter deployed adjacent one of the plurality of housings, the adapter configured to receive first and second extruded polymers and to provide first and second polymer layers to the die insert in said one of the plurality of housings, the first and second polymer layers being adjacent each other and including the first and second extruded polymers, respectively.
36. The microlayer die assembly of paragraph 35, wherein the plurality of die inserts are deployed along the axis to receive a first polymer stack comprising a first plurality of alternating layers of the first and second extruded polymers and to provide a second polymer stack comprising a second plurality of alternating layers of the first and second extruded polymers, the numbers of alternating layers in the second plurality being double the number of alternating layers in the first plurality.
37. A system, comprising:
   a first source of a first silicon containing material;
   a second source of a second silicon containing material; and
   a multilayer die assembly configured to receive the first and second silicon containing materials from the first and second sources, respectively, and form a multilayer polymer stack comprising a plurality of alternating first and second layers formed of the first and second silicon containing materials, respectively, the multilayer die assembly comprising a plurality of die inserts, each die insert being configured to receive a first polymer stack comprising a first plurality of alternating layers of the first and second silicon containing materials and to provide a second polymer stack comprising a second plurality of alternating layers of the first and second silicon containing materials, the number of alternating layers in the second plurality being double the number of alternating layers in the first plurality.
38. The system of paragraph 37, wherein the first source comprises a first single screw extruder for providing a first silicone resin.
39. The system of paragraph 38, wherein the second source comprises a second single screw extruder for providing a second silicone resin.
40. The system of paragraph 38, wherein the second source comprises a gum pot and a gear pump for providing polydimethylsiloxane.
41. The system of paragraph 37, wherein the multilayer die assembly comprises:
   a plurality of die inserts deployed adjacent each other, each die insert comprising:
      first and second die insert components, each die insert component formed of first and second L-shaped sheets, each L-shaped sheet having first and second legs intersecting at approximately right angles to form an inner corner of the L-shaped sheet and an outer corner of the L-shaped sheet, the first and second L-shaped sheets being deployed perpendicular to each other and meeting at their respective inner corners, the first leg of each L-shaped sheet being bent so that a top edge of the leg is adjacent the outer corner of the other L-shaped sheet,
      the first and second die insert components being joined such that the second leg of the first L-shaped sheet in the first die insert component is parallel to and adjacent the second leg of the first L-shaped sheet in the second die insert component, and
      each of the plurality of die inserts being aligned along an axis that is in a first plane defined by the adjacent second legs of the first L-shaped sheets in the first and second die insert components, the axis also being in a second plane defined by adjacent second legs of the second L-shaped sheets in the first and second die insert components, the second plane being perpendicular to the first plane.
42. The system of paragraph 41, wherein the multilayer die assembly comprises an adapter configured to receive the first and second extruded silicon containing materials from the first and second sources, respectively, and to provide a polymer stack comprising first and second polymer layers to one of the plurality of die inserts.
43. The system of paragraph 37, comprising a cooling bath for receiving the multilayer polymer stack from the multilayer die assembly and cooling the multilayer polymer stack.
44. The system of paragraph 43, comprising a strand puller for receiving the multilayer polymer stack from the cooling bath and stretching the multilayer polymer stack to increase at least one dimension of the multilayer polymer stack in at least one direction parallel to the plurality of alternating layers.
45. A multilayered polymer material comprising alternating layers formed of a first silicon containing polymer and a second polymer, the multilayer polymer material being formed using a system, comprising:
   a first source of the first silicon containing polymer;
   a second source of the second polymer; and
   a multilayer die assembly configured to receive the first silicon containing polymer and the second polymer from the first and second sources, respectively, and form a multilayer polymer stack comprising a plurality of alternating first and second layers formed of the first silicon containing polymer and the second polymer, respectively, the multilayer die assembly comprising a plurality of die inserts, each die insert being configured to receive a first polymer stack comprising a first plurality of alternating layers of the first silicon containing polymer and the second polymer and to provide a second polymer stack comprising a second plurality of alternating layers of the first silicon containing polymer and the second polymer, the number of alternating layers in the second plurality being double the number of alternating layers in the first plurality.
46. The multilayered polymer material formed using the system of paragraph 45, wherein the first source comprises a first single screw extruder for providing a first silicon resin.
47. The multilayered polymer material formed using the system of paragraph 46, wherein the second source comprises a second single screw extruder for providing a second silicone resin.
48. The multilayered polymer material formed using the system of paragraph 45, wherein the first source comprises a first single screw extruder for providing a first silicone rubber.
49. The multilayered polymer material formed using the system of paragraph 48, wherein the second source comprises a gum pot and a gear pump for providing an organic polymer.
50. The multilayered polymer material formed using the system of paragraph 45, wherein the multilayer die assembly comprises:
   a plurality of die inserts deployed adjacent each other, each die insert comprising:
      first and second die insert components, each die insert component formed of first and second L-shaped sheets, each L-shaped sheet having first and second legs intersecting at approximately right angles to form an inner corner of the L-shaped sheet and an outer corner of the L-shaped sheet, the first and second L-shaped sheets being deployed perpendicular to each other and meeting at their respective inner corners, the first leg of each L-shaped sheet being bent so that a top edge of the leg is adjacent to outer corner of the other L-shaped sheet,
      the first and second die insert components being joined such that the second leg of the first L-shaped sheet in the first die insert component is parallel to and adjacent to the second leg of the first L-shaped sheet in the second die insert component, and
      each of the plurality of die inserts being aligned along an axis that is in a first plane defined by the adjacent second legs of the first L-shaped sheets in the first and second die insert components, the axis also being in a second plane defined by adjacent second legs of the second L-shaped sheets in the first and second die insert components, the second plane being perpendicular to the first plane.
51. The multilayered polymer material formed using the system of paragraph 50, wherein the multilayer die assembly comprises an adapter configured to receive the first silicon containing polymer and the second polymer that are extruded from the first and second sources, respectively, and to provide a polymer stack comprising first and second polymer layers to one of the plurality of die inserts.
52. The multilayered polymer material formed using the system of paragraph 45, the system comprising a cooling bath for receiving the multilayer polymer stack from the multilayer die assembly and cooling the multilayer polymer stack.
53. The multilayered polymer material formed using the system of paragraph 52, the system comprising a strand puller for receiving the multilayer polymer stack from the cooling bath and stretching the multilayer polymer stack to increase at least one dimension of the multilayer polymer stack in at least one direction parallel to the plurality of alternating layers.

## Claims

1. A die insert component, comprising:
first and second L-shaped sheets, each L-shaped sheet having two legs intersecting at approximately right angles to form an inner corner of the L-shaped sheet and an outer corner of the L-shaped sheet, the two L-shaped sheets being deployed perpendicular to each other and meeting at their respective inner corners, one leg of each L-shaped sheet being bent so that a top edge of the leg is adjacent the outer corner of the other L-shaped sheet.

2. A die insert, comprising:
first and second die insert components according to claim 1;
the first and second die insert components being joined such that the second leg of the first L-shaped sheet in the first die insert component is parallel to and adjacent the second leg of the first L-shaped sheet in the second die insert component.

3. A microlayer die assembly, comprising:
a plurality of die inserts according to claim 2, the plurality of die inserts being deployed adjacent each other;
each of the plurality of die inserts being aligned along an axis that is in a first plane defined by the adjacent second legs of the first L-shaped sheets in the first and second die insert components, the axis also being in a second plane defined by adjacent second legs of the second L-shaped sheets in the first and second die insert components, the second plane being perpendicular to the first plane.

4. The microlayer die assembly of claim 3, comprising a plurality of housings, each housing encompassing one of the plurality of die inserts, the housings being deployed adjacent each other such that the plurality of die inserts are aligned along the axis.

5. The microlayer die assembly of claim 3, comprising an adapter deployed adjacent one of the plurality of housings, the adapter configured to receive first and second extruded polymers and to provide first and second polymer layers to the die insert in said one of the plurality of housings, the first and second polymer layers being adjacent each other and including the first and second extruded polymers, respectively.

6. The microlayer die assembly of claim 5, wherein the plurality of die inserts are deployed along the axis to receive a first polymer stack comprising a first plurality of alternating layers of the first and second extruded polymers and to provide a second polymer stack comprising a second plurality of alternating layers of the first and second extruded polymers, the number of alternating layers in the second plurality being double the number of alternating layers in the first plurality.

7. A system comprising:
a first source of a first silicon containing material;
a second source of a second silicon containing material; and
a multilayer die assembly configured to receive the first and second silicon containing materials from the first and second sources, respectively, and form a multilayer polymer stack comprising a plurality of alternating first and second layers formed of the first and second silicon containing materials, respectively, the multilayer die assembly comprising a plurality of die inserts, each die insert being configured to receive a first polymer stack comprising a first plurality of alternating layers of the first and second silicon containing materials and to provide a second polymer stack comprising a second plurality of alternating layers of the first and second silicon containing materials, the number of alternating layers in the second plurality being double the number of alternating layers in the first plurality;
wherein the multilayer die assembly comprises the micro layer die assembly of claim 3.

8. The system of claim 7, wherein the multilayer die assembly comprises an adapter configured to receive the first and second extruded silicon containing materials from the first and second sources, respectively, and to provide a polymer stack comprising first and second polymer layers to one of the plurality of die inserts.

9. A multilayered polymer material comprising alternating layers formed of a first silicon containing polymer and a second polymer, the multilayered polymer material being formed using a system according to claim 7 or claim 8.

10. A system comprising:
a first source of a first silicon containing material;
a second source of a second silicon containing material; and
a multilayer die assembly configured to receive the first and second silicon containing materials from the first and second sources, respectively, and form a multilayer polymer stack comprising a plurality of alternating first and second layers formed of the first and second silicon containing materials, respectively, the multilayer die assembly comprising a plurality of die inserts, each die insert being configured to receive a first polymer stack comprising a first plurality of alternating layers of the first and second silicon containing materials and to provide a second polymer stack comprising a second plurality of alternating layers of the first and second silicon containing materials, the number of alternating layers in the second plurality being double the number of alternating layers in the first plurality.

11. The system of claim 10, wherein the first source comprises a first single screw extruder for providing a first silicone resin.

12. The system of claim 11, wherein the second source comprises a second single screw extruder for providing a second silicone resin.

13. The system of claim 10, wherein the first source comprises a first single screw extruder for providing a first silicone rubber.

14. The system of claim 11 wherein the second source comprises a gum pot and a gear pump for providing an organic polymer, e.g. polydimethylsiloxane.

15. The system of claim 10, comprising a cooling bath for receiving the multilayer polymer stack from the multilayer die assembly and cooling the multilayer polymer stack.

16. The system of claim 15, comprising a strand puller for receiving the multilayer polymer stack from the cooling bath and stretching the multilayer polymer stack to increase at least one dimension of the multilayer polymer stack in at least one direction parallel to the plurality of alternating layers.

17. A multilayered polymer material comprising alternating layers formed of a first silicon containing polymer and a second polymer, the multilayered polymer material being formed using a system according to any one of claims 10 to 16.
